# EUROPÄISCHE PATENTSCHRIFT

(11) **EP 3 562 636 B1**
(45) Veröffentlichungstag und Bekanntmachung des Hinweises auf die Patenterteilung: **08.02.2023**
(21) Anmeldenummer: 17863275.8
(22) Anmeldetag: 31.12.2017
(51) Int. Cl.: B27M 1/08, B23Q 3/08, B23Q 3/06

(54) **BEARBEITUNGSSTATION**
MACHINING STATION
STATION DE TRAITEMENT

(30) Priorität: 31.12.2016 DE 102016015583; 31.12.2016 DE 102016015584; 31.12.2016 DE 102016015586
(43) Veröffentlichungstag der Anmeldung: 06.11.2019
(73) Patentinhaber: Zimmer, Martin, 77866 Rheinau (DE); Zimmer, Günther, 77866 Rheinau (DE)
(72) Erfinder: Zimmer, Martin, 77866 Rheinau (DE); Zimmer, Günther, 77866 Rheinau (DE)
(74) Vertreter: Thämer, Wolfgang
(86) Internationale Anmeldenummer: PCT/IB2017/001774
(87) Internationale Veröffentlichungsnummer: WO 2018/122618

(56) Entgegenhaltungen:
- EP-A1- 2 281 671
- EP-A1- 2 305 440
- EP-A1- 2 796 257
- EP-A1- 3 315 270
- EP-A2- 1 207 028
- WO-A1-2014/177922
- GB-A- 2 492 347
- IT-A1- BO20 110 010
- US-A- 4 955 119

## Beschreibung

Die Erfindung betrifft eine Bearbeitungsstation zum Bearbeiten von platten- und/oder brettartigen Werkstücken gemäß dem Oberbegriff des Patentanspruchs 1.

Unter anderem in der möbelfertigenden Industrie werden als Bearbeitungsstationen sogenannte Linearautomaten verwendet. Dies sind in der Regel relativ kurze Transferstraßen, in deren mittleren Bereich das werkstücketragende Transportsystem von mehreren, eng angeordneten Bearbeitungsmaschinen umgeben ist.

Aus der DE 10 2013 221 725 A1 ist ein Verfahren und eine Vorrichtung zum Bearbeiten von Werkstücken bekannt. Die Werkstücke werden auf dem Maschinenbett auf horizontal ausgerichteten Förderrollen bewegt und abgestützt. Das Maschinenbett und die Förderrollen werden von einem Portal überbrückt, auf dem die Bearbeitungseinrichtung mit ihren Werkzeugen verfahrbar angeordnet ist.

Die EP 2 796 257 A1 offenbart eine Bearbeitungsstation gemäß dem Oberbegriff des Patentanspruchs 1 und beschreibt ein vertikales Bearbeitungszentrum zur Bearbeitung von plattenartigen Werkstücken. Dieses verfügt über ein im Wesentlichen vertikal angeordnes Werkstückstützgatter, unterhalb dessen nebeneinander zwei werkstücktragende Rollbahnen angeordnet sind, von denen eine höhenverstellbar ist. Zwischen den Rollbahnen und dem Werkstückstützgatter ist ein Führungssystem angeordnet, das einen breiten mit einem Spindelantrieb versehenen Führungswagen lagert. Der Führungswagen hat mehrere Saugelemente, mit denen er die rückseitig angesaugten Werkstücke entlang dem Werkstückstützgatter bewegen kann. Vor dem Werkstückstützgatter steht ein Ständer, an dem ein auf einem Y-Schlitten gelagerter Bearbeitungskopf angeordnet ist.

Der vorliegenden Erfindung liegt die Problemstellung zugrunde, eine Bearbeitungsstation zu entwickeln, in der verschiedene Werkzeuge einzeln oder gruppenweise im dreidimensionalen Raum frei bewegbar sind, um platten- und/oder brettartige Werkstücke trennend und/oder fügend zu bearbeiten und/oder zu handhaben.

Diese Problemstellung wird mit den Merkmalen des Hauptanspruchs gelöst. Dazu hat die Bearbeitungsstation ein langgestrecktes Werkstückstützgatter, an dem die Werkstücke mit einer Seite verschiebbar anliegen. In das Werkstückstützgatter ist eine Stützeinrichtung integriert, die die Werkstücke während der Bearbeitung abstützt und/oder fixiert. Die Bearbeitungsstation hat ein Transportsystem für die Werkstücke, mit dem diese entlang dem Werkstückstützgatter mindestens getragen, geführt und bewegt werden. Sie weist mindestens zwei Handhabungsgeräte auf, die automatisch gesteuerte, frei programmierbare - in drei oder mehr Achsen bewegliche - Mehrzweckmanipulator sind. Jedes Handhabungsgerät trägt und führt eine Multifunktionseinheit, die eine Vielzahl von bewegbaren Werkzeugen aufweist und diese über mindestens einen zentralen Antrieb antreibt. Mindestens eine Multifunktionseinheit ist über einen Distanzflansch am tragenden Handhabungsgerät angeordnet. Zur Bearbeitung des ruhenden oder bewegten Werkstücks über das einzelne Handhabungsgerät ist mindestens ein Werkzeug am Werkstück zum Eingriff bringbar.

Die Bearbeitungsstation ist eine universelle Maschine zum spanenden und/oder spanlosen Bearbeiten z.B. von Möbelteilen. Hierbei werden die in der Regel großflächigen Möbelteile über ein eigenes Transportsystem dem Maschinenkernbereich zugeführt und dort mit Bohrungungen, Ausnehmungen, Einsenkungen, Nuten, Kerben, Fasen und dergleichen versehen. Zugleich können in der Maschine z.B. Dübel gesetzt und Beschläge gehandhabt und montiert werden. Auch können die Werkstücke, also Möbelteile oder ihre Halbzeuge, vor und/oder nach der Bearbeitung z.B. bezüglich ihrer Geometrie geprüft oder vermessen werden.

Dazu ist die Bearbeitungsstation so aufgebaut, dass sie unterschiedlichste Werkstücke nacheinander ohne Umrüstung bearbeiten kann. Hierfür werden die platten- und/oder brettartigen Werkstücke entlang einem langgestreckten, z.B. geradlinigen Werkstückstützgatter vor eine Gruppe von Robotern transportiert. Die Roboter tragen jeweils eine Multifunktionseinheit. Jede Multifunktionseinheit ist ein Träger von einer Vielzahl von angetriebenen Werkzeugen, die aus der Bearbeitungsseite der Multifunktionseinheit teilweise ausfahrbar herausragen. Zum Bearbeiten der Werkstücke führen die Roboter ihre Multifunktionseinheiten auf das jeweilige Werkstück zu, um nach dem Bearbeiten vom Werkstück wieder weggeschwenkt zu werden. Sind mehrere Roboter zeitgleich im Einsatz, so bearbeiten die Werkzeuge mehrerer Multifunktionseinheiten das Werkstück, wobei die Multifunktionseinheiten unabhängig voneinander bewegt werden. Die Bearbeitungsstation ist somit eine Roboterzelle.

Wird während der Arbeitsphase der Bearbeitungsstation der Verschleiß eines einzelnen Werkzeuges erkannt, so wird die Multifunktionseinheit, die dieses Werkzeug trägt, mittels des Roboters aus der Bearbeitungszone herausgeschwenkt. Dort wird entweder mittels eines Bedieners das schadhafte Werkzeug ausgetauscht oder die Multifunktionseinheit wird automatisch durch eine identisch bestückte Multifunktionseinheit ersetzt. Die Multifunktionseinheiten und die Roboter haben dazu jeweils Adapter einer entsprechenden Schnellwechselkupplung.

Als fügende Werkzeuge sind ggf. neben Niederhaltern, Andruckstempeln und Andruckleisten auch ausfahrbare Greifer in der Multifunktionseinheit integriert. Letztere können beispielsweise Holzdübel in entsprechende Bohrungen der Werkstücke einpressen. Die Multifunktionseinheit nimmt dazu mit Hilfe des oder der Greifer in speziellen Übergabestellen einen oder mehrere Holzdübel auf.

Weitere Einzelheiten der Erfindung ergeben sich aus den Unteransprüchen und der nachfolgenden Beschreibung mindestens einer schematisch dargestellten Ausführungsform.
- Figur 1:: perspektivische Ansicht der Bearbeitungsstation von vorn;
- Figur 2:: perspektivische Ansicht der Werkzeugseite einer Multifunktionseinheit;
- Figur 3:: Draufsicht auf die Werkzeugseite zu Figur 2;
- Figur 4:: Schnitt durch den Getriebezug zu Figur 2;
- Figur 5:: perspektivische Draufsicht einer Multifunktionseinheit mit ungekuppelter Schnittstelle;
- Figur 6:: perspektivische Unteransicht einer Multifunktionseinheit mit ungekuppelter Schnittstelle;
- Figur 7:: Schnitt durch die Multifunktionseinheit nach Figur 8 auf der Höhe des Antriebsmotors;
- Figur 8:: perspektivische Ansicht einer Multifunktionseinheit mit langen Andrückleisten;
- Figur 9:: Stirnansicht eines Werkstücktransportsystems;
- Figur 10:: perspektivische Ansicht eines Umsetzers;
- Figur 11:: perspektivische Ansicht von schräg vorn eines Werkstückwagens;
- Figur 12:: wie Figur 11, jedoch von schräg hinten;
- Figur 13:: perspektivische Ansicht der beweglichen Stützvorrichtung von schräg vorn; Figur 1;
- Figur 14:: perspektivische Ansicht der beweglichen Stützvorrichtung von schräg hinten;
- Figur 15:: Schnitt durch den unteren Teil der Stützvorrichtung mit einem Verstellgetriebe zur Verstellung zweier Stützböcke;
- Figur 16:: Schnitt durch das Verstellgetriebe: Der Saugerstützbock ist ausgefahren;
- Figur 17:: Schnitt durch das Verstellgetriebe: Der Gleiterstützbock ist ausgefahren;
- Figur 18:: Gelenkroboter zum Tragen und Führen der einzelnen Multifunktionseinheit.

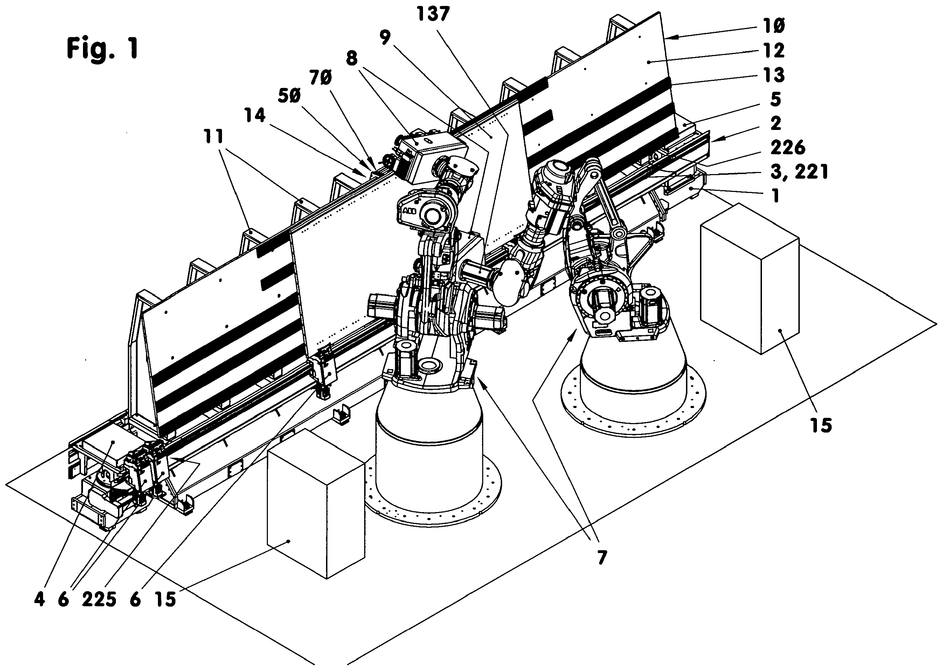

Die Figur 1 zeigt eine Bearbeitungsstation zum Bearbeiten von platten- und/oder brettartigen Werkstücken (9). Dazu hat die Bearbeitungsstation ein z.B. geradliniges langgestrecktes Maschinenbett (1), auf dem ein Werkstückstützgatter (10) aufgebaut ist. Entlang dem Werkstückstützgatter (10) ist ein Werkstücktransportsystem (2) angeordnet. Letzteres besteht u.a. aus zwei z.B. parallel verlegten Transportschienen (3), die jeweils endseitig vor Drehscheiben (4, 5) enden. Auf den vor dem Werkstückstützgatter (10) gelegenen Schienen (3) bewegen sich - ggf. zu Gruppen zusammengefasste - selbstfahrende Werkstückwagen (6), die die Werkstücke (9) - vorwärts - entlang dem Werkstückstützgatter (10) transportieren. Auf einer hinter, über oder unter dem Werkstückstützgatter (10) gelegenen Transportschiene fahren die Werkstückwagen (6) zurück.

Das Werkstückstützgatter (10) dient zur Anlage der platten- oder brettförmigen Werkstücke, die beispielsweise aus Werkstoffen wie Holz, Spanplatten, Gipskartonagen, Faserzement oder dergleichen gefertigt sind. Zu diesen Werkstoffen zählen auch Verbundwerkstoffe und Aluminumlegierungen.

Gegenüber dem Werkstückstützgatter (10) und jenseits des Werkstücks (9) sind z.B. zwei Handhabungsgeräte (7) angeordnet, die jeweils eine Multifunktionseinheit (8) tragen und führen. Die Handhabungsgeräte (7) sind hier beispielsweise Gelenkroboter mit einer sogenannten RRR-Kinematik.

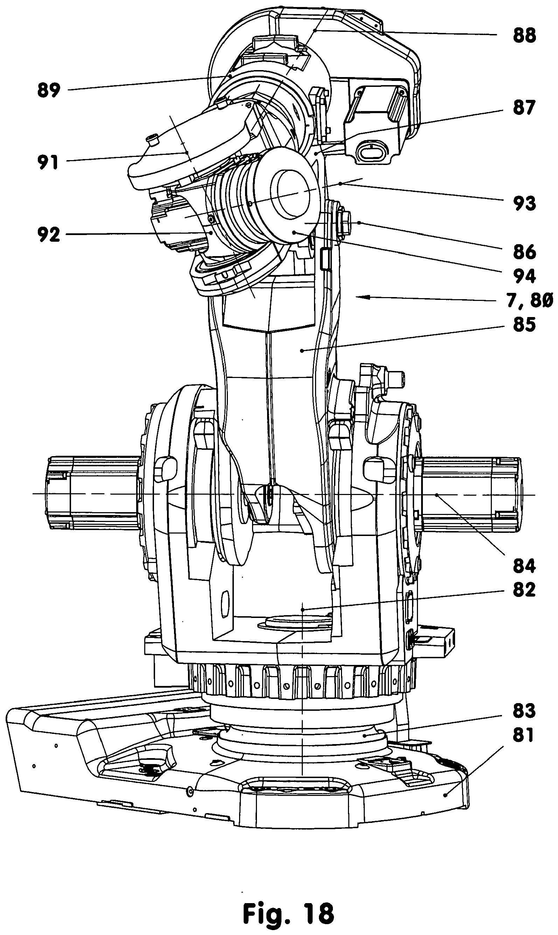

Die Figur 18 zeigt ein als mehrgliedriger Gelenkroboter (80) ausgebildetes Handhabungsgerät (7) mit einer sogenannten RRR-Kinematik. Die serielle kinematische Struktur des Gelenkroboters (80) hat drei rotatorische Hauptachsen und drei rotatorische Nebenachsen. Die Hauptachsen stellen die A-Achse (82), die B-Achse (84) und die C-Achse (86) dar. Die A-Achse (82) ist ein Drehtisch (83) mit vertikaler Rotationsachse, der auf der Grundplatte (81) des Handhabungsgeräts (7) gelagert ist. Der Drehtisch (83) lagert als erstes Kinematikkettenglied einen um die horizontale B-Achse (84) - um z.B. 210 Winkelgrade - schwenkbaren Fußhebel (85). Am freien Ende des Fußhebels (85) sitzt als Gelenk mit ebenfalls horizontaler Schwenkachse die C-Achse (86), die den Kniehebel (87) trägt. Der Kniehebel (87) ist gegenüber dem Fußhebel (85) um z.B. 270 Winkelgrade schwenkbar.

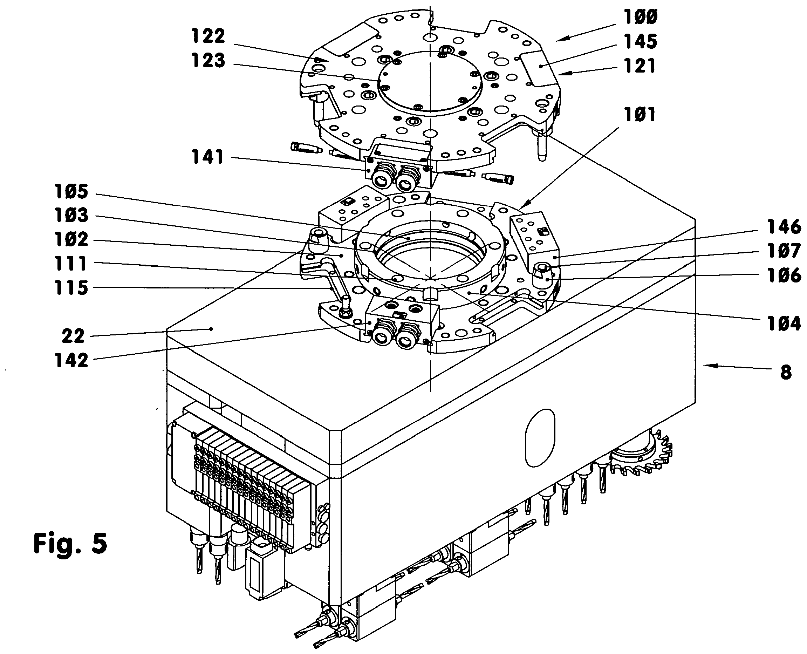

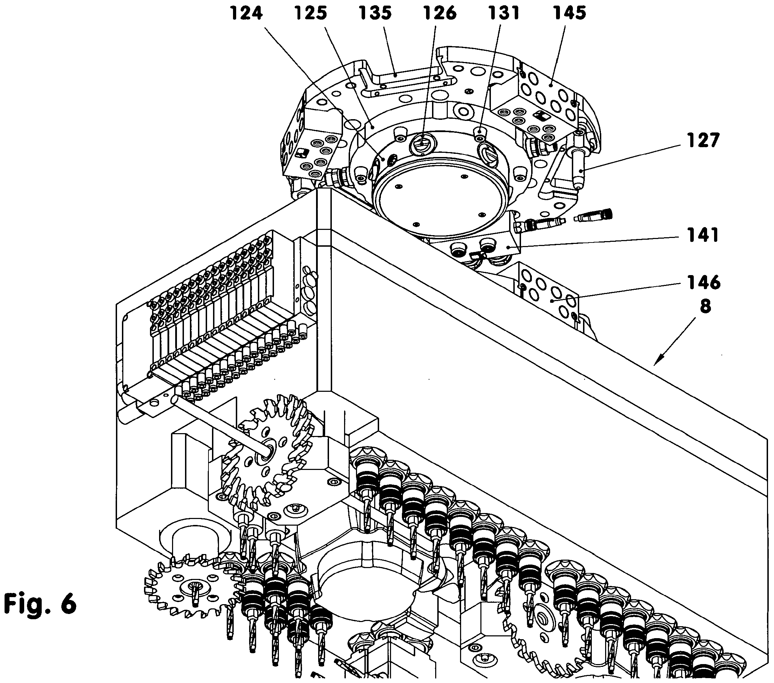

Die erste Nebenachse, die D-Achse (88), ist eine Rotationsachse. Sie besteht aus einem um seine Längsachse drehbaren Tragarm (89), der am freien Ende des Kniehebels (87) gelagert ist. Die zweite Nebenachse ist die E-Achse (91), um die der Handhebel (92) um z.B. 270 Winkelgrade schwenkbar gelagert ist. Der Handhebel (92) trägt einen um 360 Winkelgrade schwenkbaren Drehteller (94), der um die F-Achse (93) rotierbar gelagert ist. Der Drehteller ist das letzte Glied der Kinematikkette. An ihm ist der Roboterflansch (121) des die Multifunktionseinheit (8) lagernden Werkzeugschnittstellensystems (100), vgl. Figuren 5 und 6, adaptiert.

Durch eine entsprechend koordinierte Ansteuerung der einzelnen Achsen (82, 84, 86, 88, 91, 93) kann nahezu jede beliebig im Arbeitsraum des Gelenkroboters (80) gelegene gerade Strecke oder gekrümmte Bahnkurve abgefahren werden. Das lässt sich auch mit Handhabungsgeräten (7) realisieren, die auf einem kartesischen, einem zylindrischen oder einem Polarroboter basieren. Die Roboter verfügen dann entsprechend über eine TTT-, RTT- oder RRT-Kinematik. Hierbei steht das "T" für translatorische und das "R" für rotatorische Hauptachsen bzw. Führungen.

Jede vom Gelenkroboter (80) getragene und geführte Multifunktionseinheit (8) weist eine Vielzahl gleichartiger und/oder verschiedener Werkzeuge auf, mit denen in das jeweilige Werkstück (9) Bohrungen, Ausnehmungen, Schlitze und dergleichen eingearbeitet werden können. Dazu werden die für einen Bearbeitungsschritt erforderlichen Werkzeuge, z.B. eine Gruppe von vier Bohrern, pneumatisch aus der Multifunktionseinheit (8) ausgefahren, verriegelt und in Rotation versetzt. Mit rotierenden Bohrern wird nun die Multifunktionseinheit (8) in eine vorgewählte Position vor dem Werkstück (9) positioniert und ab dort geradlinig mittels des Handhabungsgeräts (7) gegen das Werkstück (9) verfahren, um die erforderliche Lochreihe zu fertigen. Am Ende des Bohrvorganges wird die Multifunktionseinheit (8) zurückgezogen. Zugleich werden die aktiven Bohrer unter Abschaltung ihrer Rotationsbewegung wieder eingefahren.

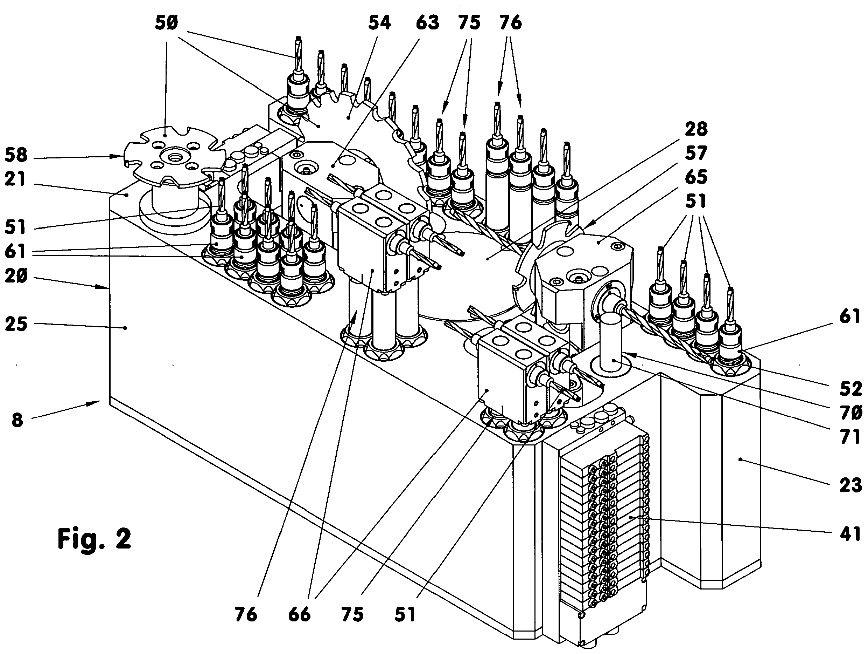

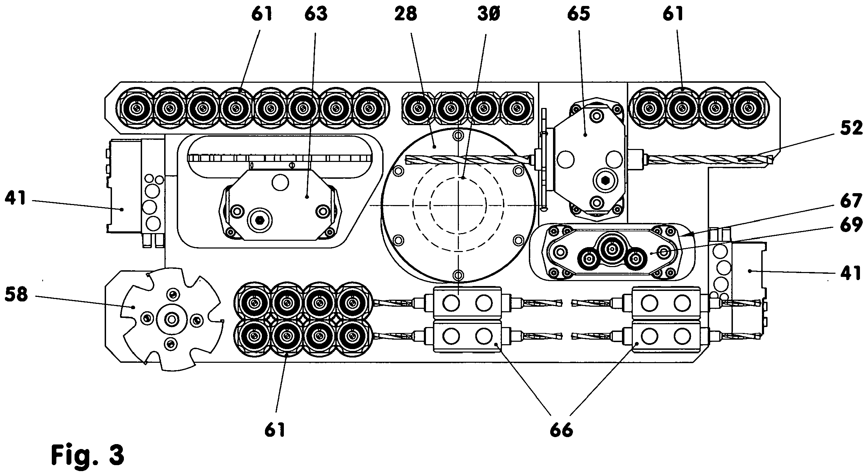

Die Figuren 2 und 3 zeigen eine Multifunktionseinheit von außen. Die Multifunktionseinheit (8) hat einen Grundkörper (20), der im Wesentlichen die Form eines langgestreckten Quaders hat, der zwei lange parallele Seitenwände und zwei erheblich kleinere Stirnseiten aufweist. Die Seitenwände und die Stirnseiten umschließen eine Frontseite, die eine sogenannte werkzeugtragende Werkzeugseite (21) dargestellt. Auf der Rückseite der Multifunktionseinheit (8) befindet sich eine zur Werkzeugseite z.B. parallele Adapterseite (22). Im mittleren Bereich des Grundkörpers (20) befindet sich unter einem Deckel (28) ein elektrischer Antriebsmotor, z.B. ein Servomotor. Nach Figur 3 weist die linke Stirnseite eine vertikale Nut auf, während die rechte Stirnseite bereichsweise zurückgesetzt ist. In der Nut und in dem zurückgesetzten Bereich sind jeweils Ventilblocks (41) angeordnet. Die jeweilige Tiefe der Nut und des zurückgesetzten Bereichs entsprechen der Höhe der Ventilblocks (41).

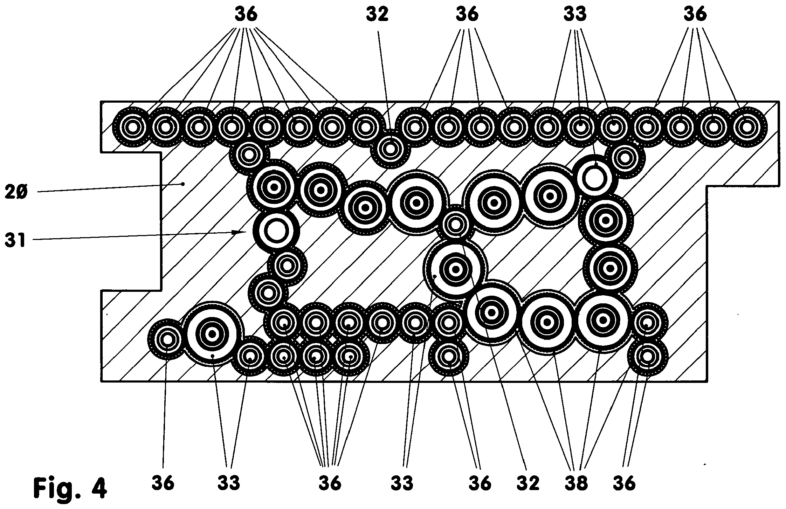

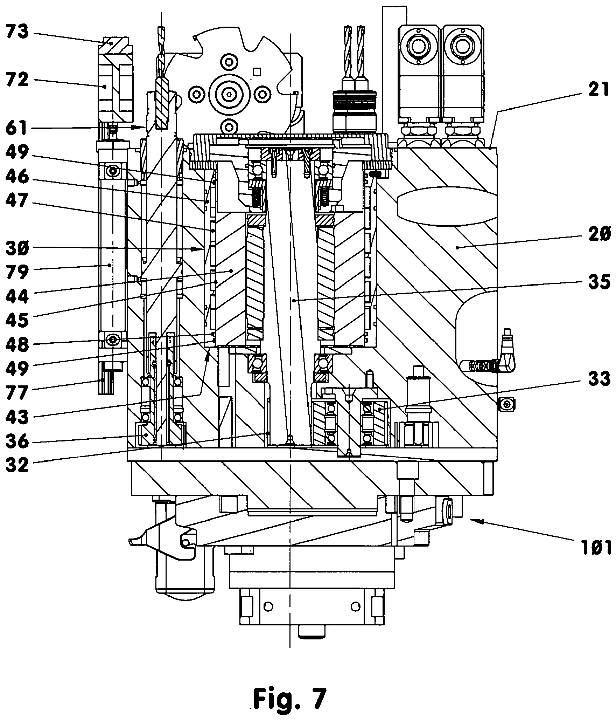

Der Servomotor (30), der ggf. über ein Kühlsystem (46-47) verfügt, ist im Grundkörper (20) so eingebaut, dass seine Antriebswelle (35) nach unten zeigt. Im unteren Bereich des Grundkörpers (20) kämmt ein auf der Antriebswelle (35) des Servomotors (30) sitzendes Hauptantriebsrad (32) mit einem Getriebe, das aus einer Vielzahl von Stirnrädern (32-36) besteht, vgl. Figuren 4 und 7. Die Figur 4 zeigt einen Schnitt durch den Grundkörper (20) bzw. den Getriebezug, der parallel zur Adapterseite (22) ausgerichtet ist. Das Antriebsrad (32) kämmt mit drei größeren Verteilerrädern (33), die über weitere Verteilerräder (33) mit einer größeren Anzahl von Abtriebsrädern (36) getriebetechnisch verbunden sind. Die Abtriebsräder (36), deren Mittellinien im Ausführungsbeispiel 32 mm voneinander entfernt sind, gehören zu pneumatisch ausfahrbaren Spindeln bzw. Pinolen (61).

In Figur 7, sie zeigt einen Querschnitt der Multifunktionseinheit, ist der Antriebsmotor (30) im Längsschnitt dargestellt. Der Antriebsmotor (30), z.B. ein Servomotor, hat einen Stator (44), der von einem flüssigkeitsgekühlten Kühlgehäuse (43) umgeben ist. Das Kühlgehäuse (43) ist ein rohrförmiger Kühlmantel (46), der mit seiner Innenwandung auf der Außenwandung (45) des Stators (44) abgedichtet aufliegt. Im vorderen und hinteren Bereich hat der Kühlmantel (46) dazu jeweils zwei Umlaufnuten (48), in denen Dichtringe (49) angeordnet sind. Zwischen dem vorderen und hinteren Bereich ist in den Kühlmantel (46) eine schraubenförmlich gewundene Nut (47) eingearbeitet. Im Ausführungsbeispiel hat der Nutquerschnitt bei einer Tiefe von 6 mm eine Breite von 12 mm. Die nach innen offene Nut (47) wird durch die Außenwandung (45) des Stators (44) zu einem geschlossenen, durchströmbaren Kanal, sodass ein Wärmetauscher entsteht. In einem Ende der Nut (47) wird über den Grundkörper (20) ein flüssiges Kühlmittel, z.B. ein Wasser-Glykol-Gemisch, eingeleitet, um am anderen Ende der Nut (47) wieder über den Grundkörper (20) ausgeleitet zu werden. Um die Ein- und Ausleitstellen herum sind wiederum Dichtmittel angeordnet.

Der Wärmetauscher erbringt eine Kühlleistung von ca. 1 kW pro Antriebsmotor (30). Er sitzt in der Regel zusammen mit einer im Grundkörper (20) angeordneten Umwälzpumpe in einem Kühlkreislauf. Ggf. ist in den Kühlkreislauf zusätzlich ein aktives Kühlaggregat integriert.

Jede Pinole (61), vgl. Figur 7, endet im Bereich der Werkzeugseite (21) in einer eine Werkzeugaufnahme (62) tragenden Spindel, um dort beispielsweise als Werkzeug jeweils Bohrer oder Fräser aufzunehmen. Zumindest ein Teil der Spindeln hat einen Ausfahrhub von z.B. 60 mm. Die ausfahrbaren Werkzeuge befinden sich in ihrer Ruhestellung in einer versenkten Parkposition (75), vgl. Figur 2. Zum Bearbeiten eines Werkstückes (9) werden sie von dort aus in eine Arbeitsposition (76) einzeln oder gruppenweise ausgefahren. Unabhängig von der Park- oder der Arbeitsposition (75, 76) bleiben alle Zahnräder (32 - 36) permanent im Eingriff.

Innerhalb des Grundkörpers sitzen alle Zahnräder (32 - 36) in einer Ebene. Hierbei befindet sich jedes Zahnrad in einer zylindrischen Aussparung des Grundkörpers, die z.B. 1 bis 2 mm größer ist als der jeweilige Kopfkreisdurchmesser des dort angeordneten Zahnrades (32 - 36). Dadurch ergibt sich um die Zahnräder herum ein schmaler Spaltraum (38). Zugleich haben die Stirnseiten der Zahnräder gegenüber dem Grundkörper jeweils pro Seite nur einen Abstand von 0,2 - 0,4 mm. In den zusammenhängenden Spaltraum (38) münden im Grundkörper mehrere von außen zugängliche Schmierstoffzuführstellen. Über letztere wird der Spaltraum (38) teilweise mit Schmierfett befüllt. Während des Betriebs wird das Schmiermittel mittels der Zahnräder (32 - 36) permanent entlang des Getriebezugs gefördert.

Nach den Figuren 2 und 3 sind auf der Werkzeugseite (21) entlang der hinteren Seitenwandungen zum Beispiel 16 Pinolen (61) mit ausfahrbaren Spindeln angeordnet. Jede Spindel trägt z.B. einen Bohrer (52). Die Bohrer sind abwechselnd links und rechtsdrehend. Im Ausführungsbeispiel nach Figur 2 sind im mittleren Bereich vier Bohrer softwaretechnisch zu einer Gruppe zusammengefasst. Sie sind hier beispielsweise ausgefahren dargestellt. Im Bereich der gegenüberliegenden Seitenwandungen ist eine Gruppe von acht Pinolen mit eingespannten Spiralbohrern (52) dargestellt. Alle bisher beschriebenen Spiralbohrer (52) sind senkrecht zur Werkzeugseite (21) ausgerichtet. Zwischen den Spiralbohrern der Achtergruppe und der hinteren Stirnseite ist eine Sägescheibe (58) zur Herstellung der Aussparungen für Clamex-Verbinder gezeigt. Zwischen den Spiralbohrern der Achtergruppe und der Reihe der 16 Pinolen (61) ist ein ausfahrbarer Einfachwinkelkopf (63) angeordnet, der eine große Sägescheibe (54) lagert, deren Scheibenebene parallel zu den langen Seitenwandungen ausgerichtet ist. Zwischen dem Deckel (28) und der vorderen Stirnseite (23) sitzt im Grundkörper (20) versenkt ein Doppelwinkelkopf (65), der eine Sägescheibe (57) auf der einen Seite und auf beiden Seiten jeweils einen Spiralbohrer trägt. Die Rotationsachsen der Sägescheibe und der Spiralbohrer verlaufen parallel zur Werkzeugseite (21) und zu den langen Seitenwandungen (25).

Zwischen dem Deckel (28) und der vorderen langen Seitenwandung (25) sind zwei kleine parallel hintereinanderliegende Doppelwinkelköpfe (66) angeordnet. Beide Doppelwinkelköpfe (66) befinden sich in der Arbeitsposition (76). Jeder Doppelwinkelkopf (66) trägt beidseits je einen Spiralbohrer, der ebenfalls parallel zu der Werkzeugseite (21) und den langen Seitenwandungen (25) ausgerichtet ist. Auf der Ecke zwischen der vorderen Seitenwandung (25) und der vorderen Stirnseite (23) sitzen zwei weitere hintereinanderliegende Doppelwinkelköpfe (66). Diese befinden sich jedoch in der Parkposition (75).

Zwischen dem Doppelwinkelkopf (65) und der vorderen Stirnseite (23) sitzt in der Werkzeugseite (21) versenkt ein fügendes Werkzeug (70). Letzteres ist ein pneumatisch ausfahrbarer Andrückstempel (71), mit dessen Hilfe - beispielsweise während eines Bohrvorgangs - das plattenförmige Werkstück (9) gegen das Werkstückstützgatter (10) oder eine andere Stützvorrichtung gedrückt wird. Das Anpressen unter Kraftschluss und das anschließende Lösen erfolgt ohne Schädigung des jeweiligen Werkstücks (9).

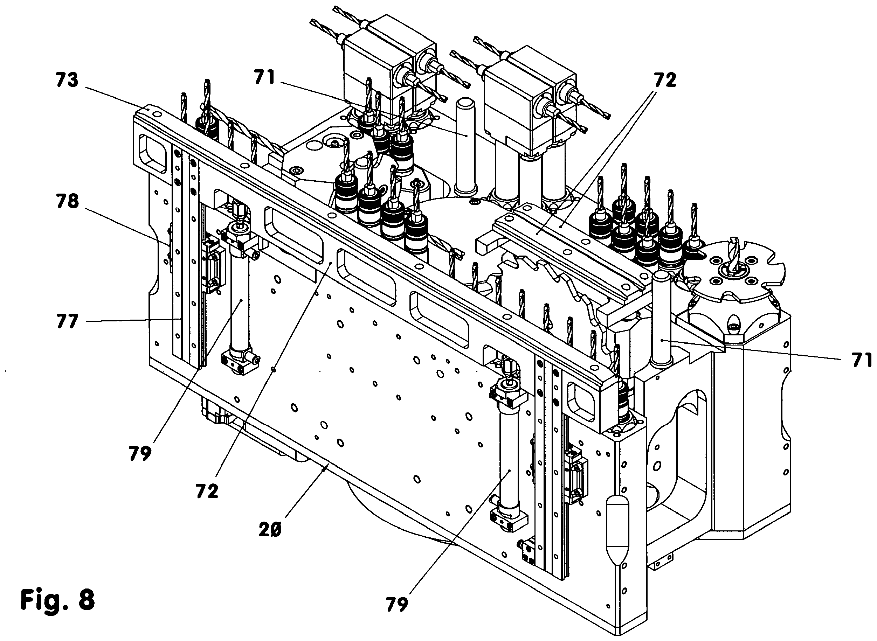

In Figur 8 sind neben den Andrückstempeln (71) auch mehrere Andrückleisten (72) zu sehen. Die als Niederhalter wirkenden Andrückleisten (72) sind beispielsweise lange Leisten, die ein- und ausfahrbar in der Multifunktionseinheit gelagert und geführt sind. Diese Andrückleisten (72), z.B. formsteife, verrippte und gewichtsoptimierte Balken, werden als gleitfähige Niederhalter verwendet. Sie werden eingesetzt, wenn das jeweilige Werkstück (9) mit einer Nut, einer Kerbe oder einer anderen langgestreckten Ausnehmung ausgestattet werden soll, deren Längsausdehnung in der Werkstücktransportrichtung liegt. Diese Ausnehmungen entstehen, indem zwischen der ortsfest positionierten Multifunktionseinheit und dem ortsfesten Werkstückstützgatter (10) - z.B. bei rotierender Sägescheibe (54) - das Werkstück (9) mit Hilfe der Werkstückwagen (6) in Werkstücktransportrichtung hindurchgezogen wird. Um nun - während des Säge- oder des Fräsvorgangs - ein Abheben des Werkstücks (9) vom Werkstückstützgatter (10) zu verhindern, werden die Andrückleisten (72), die hier z.B. beidseits der Sägescheibe (54) angeordnet sind, in Richtung des Werkstückstützgatters (10) pneumatisch ausgefahren.

Dazu sind die Andrückleisten (72) parallel zur Werkstücktransportrichtung orientiert. Zudem sind sie im Ausführungsbeispiel in Richtung der maximalen Längsausdehnung der Multifunktionseinheit ausgerichtet. Um reibungsarm und beschädigungsfrei entlang dem Werkstück (9) gleiten zu können, sind die Andrückleisten (72) mit einem entsprechenden Gleitbelag (73) ausgestattet, vgl. Figuren 7 und 8. Die vordere, an der großen Seitenwandung gelagerte Andrückleiste (72) ist an zwei Führungsschienen (77) befestigt, die von unten her senkrecht an dieser anliegen. Jede Führungsschiene (77) ist in mindestens einem am Grundkörper (20) angeordneten Kugelumlaufschuh (78) geführt. Parallel zur Führungsrichtung der Kugelumlaufschuhe (78) sind am Grundkörper (20) zwei Pneumatikzylinder (79) angeordnet. Die Kolbenstangen dieser Zylinder sind an der Andrückleiste (72) angelenkt. Die Andrückleisten (72) werden bei Bedarf gesteuert ausgefahren. Nach Abschluss der Säge- oder Fräsbearbeitung werden sie wieder in ihre Parkstellung zurückgefahren.

Unabhängig von den spanenden und/oder fügenden Werkzeugen können am Grundkörper (20) auch ein 1-D- oder 3-D-Mehrkoordinatentaster oder dergleichen angeordnet sein. Die Taster, die aus dem Grundkörper beispielsweise herausgefahren oder herausgeklappt werden können, dienen dem Ausrichten der Multifunktionseinheit gegenüber dem Werkstückstützgatter bzw. dem Maschinenbett. Dazu ist am Werkstückstützgatter oder dem Maschinenbett entsprechende Referenzgeometrie angeordnet, die durch die Taster zu Messwerken angefahren werden können.

Im oder am Grundkörper ist eine elektronische Wasserwaage und gegebenenfalls auch ein Beschleunigungssensor angeordnet, um unabhängig von den Steuerungsdaten der für die Handhabungsgeräte und die von diesen getragenen Multifunktionseinheiten zuständigen Steuerungen die Lage im dreidimensionalen Raum redundant kontrollieren zu können.

Die Figuren 5 und 6 zeigen ein Werkzeugschnittstellensystem mit einem grundkörperseitigen Adapter (101), einem sog. Werkzeugflansch, und einem Gegenadapter (121), einen sog. Roboterflansch, der beispielsweise an einem Handhabungsgerät (7) befestigt ist. Der Adapter (101) hat eine auf der Adapterseite (22) des Grundkörpers verschraubte Flanschplatte (102).

Auf der Flanschplatte (102) ist ein Flanschring (104) angeformt. Durch die Kombination aus Flanschplatte und Flanschring erstreckt sich eine Zentrierzentrumsbohrung (103). Die Innenwandung dieser Bohrung trägt eine Rastringnut (105). Außerhalb des Flanschringes (104) trägt die Flanschplatte (102) zwei weit auseinanderliegende Zentrieraufsatzhülsen. In der freien Stirnfläche des Flanschringes (104) sind sechs kegelstumpfmantelförmige Drehsperrausnehmungen (111) - äquidistant verteilt - angeordnet.

Das komplementäre Gegenstück zum Adapter (101) ist ein am Handhabungsgerät (7) angeordneter Gegenadapter (121). Nach Figur 5 weist die Rückseite seiner Flanschplatte (122) einen Zentrierzentrumsbund (123) auf, über den er am Handhabungsgerät zentriert ist. Auf seiner dem Adapter (101) zugewandten Seite, vergleiche Figur 6, erhebt sich auf der Flanschplatte ein großer zylindrischer Flanschzapfen (124), der im unteren Bereich von einem zylindrischen Zentrierzentrumsbund (123) umgeben ist. Der Flanschzapfen (124) trägt an seinem Umfang zum Beispiel sechs bewegliche Verriegelungsbolzen (126), die radial abstehen. Die Verriegelungsbolzen (126) sind beispielsweise pneumatisch in den Flanschzapfen (124) einsehbar. Das Verriegeln der Verriegelungsbolzen (126) erfolgt im Flanschzapfen beispielsweise mittels Luftdruck und/oder mittels Federkraft.

Um den Werkzeugflansch am Roboterflansch beim Ankurbeln vorzentrieren zu können, sind auf der Flanschplatte (122) - im Bereich des äußeren Randes - zusätzlich zwei Zentrierbolzen (127) angeordnet.

Auf der freien Stirnseite des gegenüber den Zentrierbolzen zurückgesetzten Zentrierzentrumsbunds (123) befinden sich z.B. sechs konische Drehsperrzapfen (131). Die Drehsperrzapfen sind gegenüber den Zentrierbolzen versetzt angeordnet.

Beim Ankuppeln des Adapters am Gegenadapter werden zunächst die Zentrierbolzen (127) in die Zentrierbohrungen (107) der Zentrieraufsatzhülsen (106) eingespurt bzw. vorzentriert. Nahezu zeitgleich taucht der Flanschzapfen (124) in die Zentrierzentrumsbohrung (103) ein. Dabei verrasten die Verriegelungsbolzen (126) in der Rastringnut (105) des Adapters, um die Multifunktionseinheit gegen das letzte Glied des jeweiligen Handhabungsgeräts (7) zu ziehen und zu verriegeln. Zudem tauchen die konischen Drehsperrzapfen (131) beim Ankuppeln in die Drehsperrausnehmungen (111) ein. Letztere verhindern ein Verdrehen des Adapters relativ zum Gegenadapter. Die Drehsperrzapfen sind bezüglich ihrer Anzahl und ihres Querschnittes so dimensioniert, dass sie die - um die Mittellinie der Werkzeugschnittstelle auftretenden - großen Lastmomente abstützen können.

Jeder Flansch (101, 121) weist beispielsweise sechs außenliegende Ausnehmungen (115, 135) auf, in denen jeweils ein Übertragungsmodul (141 - 146) anordenbar ist. Je zwei innerhalb des Werkzeugschnittstellensystems (100) sich gegenüberliegende Übertragungsmodule (141, 142; 145, 146) bilden ein ineinandersteckbares Übertragungsmodulpaar. Die in Figur 5 vorn liegenden Übertragungsmodule (141, 142) weisen an ihren einander zugeordneten Stirnflächen zwei nebeneinanderliegende 19 polige Steckverbinder auf. Das werkzeugseitige Übertragungsmodul (142) trägt z.B. die Stecker, während das roboterseitige Übertragungsmodul (141) die entsprechenden Steckbuchsen vorweist. Die beiden anderen Übertragungsmodule pro Flansch (101, 121) haben jeweils sechs Übergänge für die Druckluftübertragung.

Der Adapter (101) hat gegenüber der Adapterseite (22) eine Adapterfläche, die erheblich kleiner ist als die Gesamtfläche der Adapterseite (22). Die Größe der Adapterfläche beträgt 20 bis 30 Prozent der Gesamtfläche der Adapterseite (22).

Nach Figur 1 weist das Werkzeugschnittstellensystem (100) des rechts angeordneten Handhabungsgeräts (7) einen Distanzflansch (137) auf, der entweder zwischen der Adapterseite (22) der Multifunktionseinheit (8) und dem Adapter (101) oder zwischen dem letzten Glied des Handhabungsgeräts (7) und dem Gegenadapter (121) angeordnet ist. Der Distanzflansch (137) hat eine Länge, die beispielsweise in der Größenordnung der Höhe der Multifunktionseinheit liegt.

Des Weiteren befindet sich nach Figur 1 neben jedem Handhabungsgerät (7) eine Einheitsablagestelle (15). Auf den Einheitsablagestellen werden die Multifunktionseinheiten durch die Handhabungsgeräte zu Wartungs-, Austauschzwecken oder zum Werkzeugwechseln frei zugänglich abgelegt.

Das Werkstücktransportsystem (2), vgl. Figur 1, stellt zum Transport der Werkstücke (9) im Ausführungsbeispiel ein das Werkstückstützgatter (10) umrundendes Schienensystem mit daran oder darauf selbstfahrenden Werkstückwagen (6) zur Verfügung. Das Schienensystem besteht aus zwei parallelen Transportschienen (221, 222), die jeweils endseitig vor Drehscheiben (4, 5) enden. Auf der vor dem Werkstückstützgatter (10) gelegenen Transportschiene (221) bewegen sich die - ggf. zu Gruppen zusammengefassten - selbstfahrende Werkstückwagen (6), die die Werkstücke (9) entlang dem Werkstückstützgatter (10) transportieren.

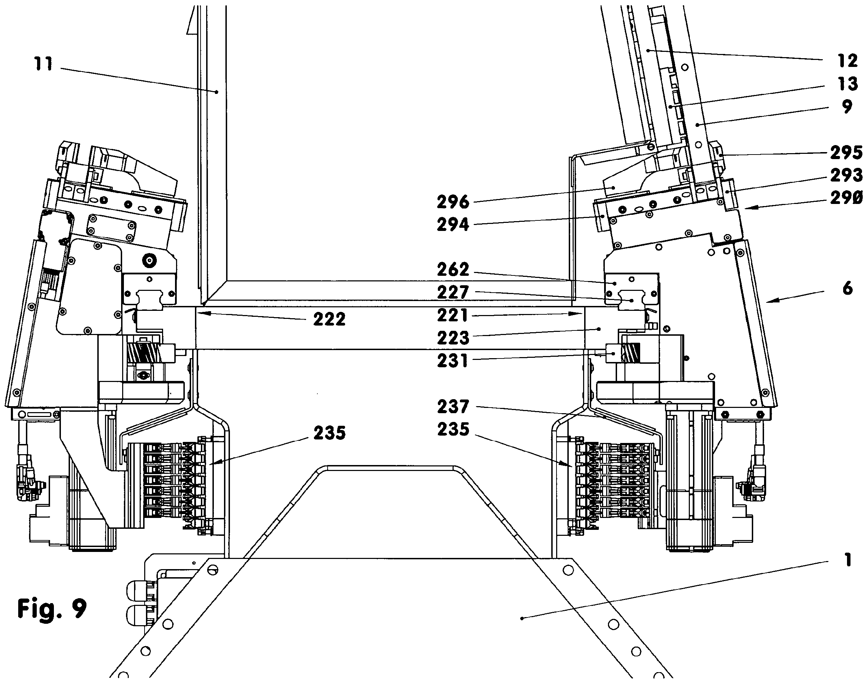

Die Figur 9 zeigt die vordere Stirnansicht des Werkstücktransportsystems (2). Es ist auf dem Maschinenbett (1) aufgebaut. Vorn und hinten am Maschinenbett sind Transportschienen (221, 222) befestigt. Sie bestehen jeweils aus einem formsteifen Tragwinkel (223), einer Tragschiene (227) und einer Zahnstange (231). Dabei sitzt die Tragschiene (227) auf dem Tragwinkel (223), während die Zahnstange (231) im unteren Bereich des Tragwinkels (223) befestigt ist. Unterhalb der Zahnstange (231) ist am Maschinenbett eine Mehrleiterstrom- und -signalschiene (235) montiert. Letztere ist im oberen Bereich mithilfe einer Stromschienenabdeckung (237) abgedeckt. Entlang dem Maschinenbett (1) können pro Seite der Tragwinkel (223), die Transportschiene (221, 222), die Zahnstange (231) und die Mehrleiterstrom- und -signalschiene (235) aus vielen Einzelstücken zusammengesetzt sein.

Selbstverständlich können die Werkstückwagen (6) über mitgeführte Energiespeicher betrieben werden. Letzterer ist beispielsweise ein Akkumulator, ein hochkapazitiver Kondensator oder eine Kombination aus beiden.

Neben oder anstelle der Verwendung eines Akkumulators kann der Werkstückwagen (6) über einen Empfänger, z.B. in Form einer Kopplungsspule, verfügen, die Teil einer drahtlosen Energieübertragung im Nachfeld darstellt. In einem Akkumulatorladebereich entlang oder parallel der Transportschienen (221, 222), z.B. auch auf einem Neben- oder Abstellgleis, werden als Sender einer Einspeisungsbaugruppe dienende Kopplungsspulen installiert, über denen der Werkstückwagen (6) mit seinem Empfänger für eine bestimmte Ladezeit abgestellt wird. Die beiden nahe beabstandeten Kopplungsspulen werden induktiv gekoppelt, wobei der vom Sender erzeugte magnetische Fluss in der empfängerseitigen Kopplungsspule eine Wechselspannung induziert. Die Wechselspannung wird gleichgerichtet einem werkstückwagenseitigen Laderegler zugeführt, der wiederum die Energiespeicher auflädt.

Im Ausführungsbeispiel sind beide Transportschienen (221) und (222) gleich lang und parallel zueinander orientiert. Ihre Oberkanten liegen außerdem in einer gemeinsamen Horizontalebene. An jedem Maschinenbettende enden zwei Transportschienenenden (225, 226) auf gleicher Höhe. Dort befindet sich nach Figur 1 jeweils eine Drehscheibe (4, 5).

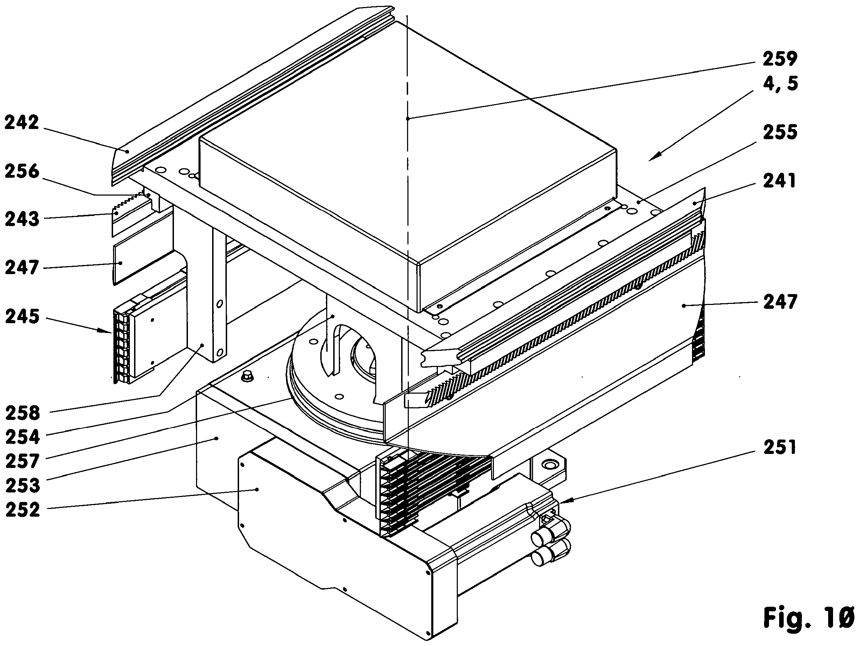

In Figur 10 ist die nach Figur 1 vordere Drehscheibe (4, 5) dargestellt. Sie hat auf der Höhe der Tragwinkel (223) als drehbare Tischplatte eine Tragplatte (255). Auf zwei einander gegenüberliegenden Kanten der Tragplatte (255) ist jeweils eine Drehscheibentragschiene (241, 242) befestigt. Die beiden Drehscheibentragschienen (241, 242) haben genau den kürzesten Abstand, den auch die Tragschienen (227) der geradlinigen Transportschienen (221, 222) haben. Unterhalb der Tragplatte (255) sind die Drehscheibenzahnstange, die Mehrleiterstrom- und -signalschiene (245) und die Stromschienenabdeckung (247) genau in der Weise angeordnet, wie das auch bei den geradlinigen Transportschienen (221, 222) der Fall ist.

Die Tragplatte (255) ruht über einen Rohrflansch (254) auf dem wälzgelagerten Drehtisch (257) eines Lagergehäuses (253). Das Lagergehäuse wiederum ist auf dem Maschinenbett (1) aufgeschraubt, vgl. Figur 1. Im Lagergehäuse befindet sich z.B. ein den Drehtisch antreibendes Winkelgetriebe, das beispielsweise über ein externes Zugmittelgetriebe (252) mit einem am Lagergehäuse (253) befestigten, elektrisch angetriebenen Drehscheibenmotor (251) antreibbar verbunden ist.

An der Unterseite der Tragplatte (255) befindet sich im Bereich unterhalb der Drehscheibentragschienen (241, 242) jeweils eine winkelförmige Zahnstangentragschiene (256), an der die Drehscheibenzahnstange (243) befestigt ist. Jeweils hinter jeder Zahnstangentragschiene sind zwei Schienenstützen (258) angeordnet, die nach unten ragen. An je zwei Schienenstützen (258) sind die Mehrleiterstrom- und -signalschienen (245) sowie die Stromschienenabdeckungen (247) befestigt.

Um die Werkstückwagen (6) problemlos von einer Transportschiene (221, 222) auf die andere Transportschiene (222, 221) übergeben zu können, sind auch die Drehscheibentragschienen (241, 242), die Drehscheibenzahnstangen (243) und die Mehrleiterstrom- und -signalschienen (235) des Umsetzers (240) stirnseitig so abgeschrägt, dass die freien Stirnseiten dieser Bauteile zylindermantelförmig gekrümmt sind, wobei die Mittellinie zum Flächenteil des Zylindermantels die Schwenkachse (259) der Drehscheibe (4, 5) ist. Die Tragschienen (227), die Zahnstangen (231) und die Mehrleiterstrom- und -signalschienen (235) der Transportschienen (221, 222) haben entsprechend konkav angepasste Stirnflächen. Der zwischen den einander gegenüberliegenden Stirnflächen vorhandene Spalt hat eine Spaltbreite von 0,1-0,3 mm.

Der Durchmesser des gedachten Zylindermantels, auf dem die Stirnflächen der Tragschienen (241, 242) und der Zahnstangen (243) liegen, dessen Mittellinie auf der Schwenkachse (259) liegt, ist größer als der kürzeste zwischen den Tragschienen (227) gelegene Abstand.

Um nun einen Werkstückwagen (6) beispielsweise von der hinteren Transportschiene (222) auf die vordere Transportschiene (221) umzusetzen, fährt der Werkstückwagen (6) nach Figur 1 auf die hintere Drehscheibentragschiene (242) auf. Nun dreht sich die Drehscheibe um ihre Schwenkachse (259) um 180 Winkelgrade. Von dort aus fährt der Werkstückwagen (6) auf die Transportschiene (221) auf. Hat der Werkstückwagen (6) nach dem Durchlaufen der Bearbeitungsstation das hintere Ende der Transportschiene (221) erreicht, fährt er auf die Drehscheibentragschiene (242) der hinteren Drehscheibe (240), um mit deren Hilfe auf die rückseitige Transportschiene (222) umgesetzt zu werden.

Demnach fährt jeder Werkstückwagen (6) innerhalb des Werkstücktransportsystems (2) quasi im Kreis herum. Wenn die Winkelgeschwindigkeit der Drehscheibe (4, 5) auf die Fahrgeschwindigkeit des einzelnen Werkstückwagens (6) eingestellt ist - also die Drehscheibenumfangsgeschwindigkeit auf der Höhe der Tragschiene (241, 242) der Fahrgeschwindigkeit des Werkstückwagens (6) entspricht - umrundet der Werkstückwagen (6) ohne merkliche Geschwindigkeitsunterbrechung durch die Drehscheiben (4, 5) den Transportweg des vorliegenden Einschienentransportsystems (2).

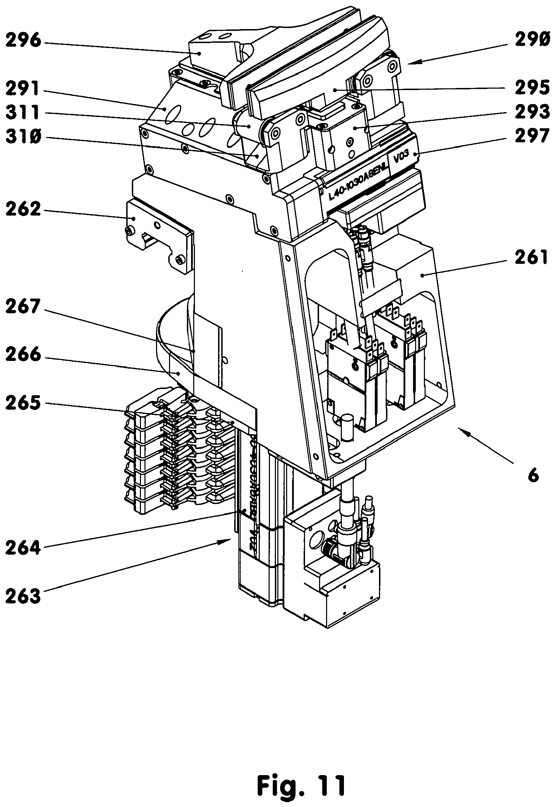

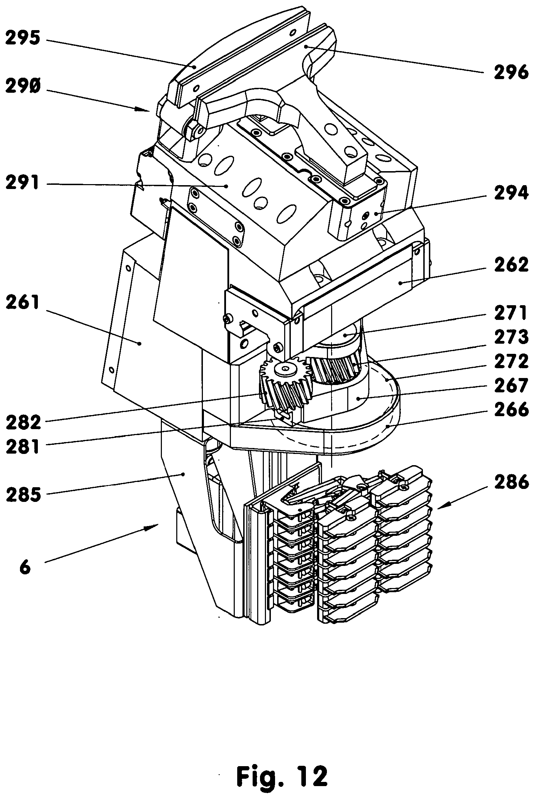

Die Figuren 11 und 12 zeigen einen Werkstückwagen (6) von der Vorder- und der Rückseite. Das zentrale Bauteil des Werkstückwagens (6) ist der winkelförmig gestaltete Grundkörper (261). Unterhalb der Auskragung des Grundkörpers (261) ist ein Führungswagen (262) angeordnet. Der Führungswagen (262) ist ein Kugelumlaufschuh, der die Tragschienen (227, 241, 242) in den vertikalen Richtungen und in den Seitenrichtungen wälzgelagert umgreift. Nach Figur 12 befindet sich unterhalb des Führungswagens (262) eine Nebenwelle (271), die das schräg verzahnte Abtriebsrad (273) trägt. Die Nebenwelle (271), die in einem Lagerbock (267) wälzgelagert gelagert ist, hat ein - gestrichelt dargestelltes - Antriebsrad (272), das von einem am Grundkörper (261) angeformten Getriebegehäuse (266) nach außen hin umschlossen ist. Unterhalb des Getriebegehäuses (266) sitzt eine Flanschplatte (265), an der ein Fahrantrieb (263) adaptiert ist. Letzterer ist beispielsweise ein nach unten ragender Servomotor (264) mit einem ggf. integrierten Getriebe. Auf der Welle des Servomotors (264) sitzt ein geradverzahntes - hier nicht dargestelltes - Ritzelrad, das mit dem Antriebsrad (272) der Nebenwelle (271) kämmt.

An der Unterseite des Grundkörpers (261) ist neben dem Fahrantrieb (263) ein nach unten ragender Abnehmerkragarm (285), ein Blechbauteil, angeordnet. An ihm sind die Strom- und Signalabnehmer (286) federnd befestigt. Im vorliegenden Fall werden sieben Abnehmer (286) verwendet. Der oberste ist z.B. an Masse angeschlossen. Die nächsten beiden Stromabnehmer (286) führen +48 V und -48 V bei z.B. 10 A Strom. Der vierte und fünfte Abnehmer sind jeweils ein Stromabnehmer (286) für +24 V und -24 V bei 5 A Strom. Die beiden unteren Abnehmer (286) sind Signalabnehmer für den z.B. hier verwendeten CAN-Bus.

Nach Figur 12 ist im Abstand von mehreren Millimetern neben dem Abtriebsrad (273) ein sogenanntes Schmierrad (282) im Abstand von einigen Millimetern angeordnet. Das Schmierrad (282), das nicht mit dem Abtriebsrad (273) kämmt, ist am Lagerbock (267) über eine Schmierradachse (281) gelagert. Es ist im Ausführungsbeispiel ein Filzrad, das extern im Bereich der Zahnstangen (231, 243) - an einer oder mehreren Stellen - jeweils mit Hilfe eines Kleinmengenschmiermittelölers mit Schmieröl benetzt wird. Das Filzrad (282) wälzt permanent an den Zahnstangen (231, 243) ab und verteilt so Schmiermittel auf den schrägverzahnten Zahnstangen (231, 243).

Anstelle des Filzrades (282) kann auch ein gesintertes bzw. zumindest bereichsweise poröses Metall-, Keramik- oder Kunststoffrad verwendet werden, das über die Schmierradachse (281) aus dem Grundkörper (261) des Werkstückwagens (6) heraus, z.B. in regelmäßigen Zeitabständen, mit Drucköl versorgt wird. Das Drucköl tritt bei dieser Variante im mittleren Bereich der Zahnflanken des Schmierrads (282) aus, um so beim Abwälzen auf die Zahnflanken der Zahnstangen übertragen zu werden. Der Öldruck des im Grundkörper (261) eingelassenen Schmiermitteltanks kann dabei durch eine kleine Pumpe, die über die Rotation des Schmierrades (282) angetrieben wird, erzeugt werden.

Gemäß der Figuren 11 und 12 sitzt auf dem Grundkörper (261) des Werkstückwagens (6) eine z.B. elektromechanisch betätigbare Spannzange (290). Im Zangengehäuse (291) ist ein Schieber mit zwei Kulissenausnehmungen angeordnet. Der Schieber - hier nicht dargestellt - wird über einen elektrisch angetriebenen Kulissenantrieb zum Öffnen und Schließen der Spannzange (290) verfahren. Jede Kulissenausnehmung hat eine andere Steigung.

Oberhalb des Schiebers sitzen quer zum Führungswagen (262) hintereinander im Zangengehäuse (291) zwei Schlitten (293, 294). Jeder Schlitten ist über einen Zapfen mit einer der Kulissenausnehmungen des Schiebers verbunden. Des Weiteren trägt jeder Schlitten auf seiner Oberseite ein Greifelement (295, 296). Das in Figur 12 vordere Greifelement (296) legt sich nach Figur 9 an der Rückseite des plattenförmigen Werkstücks (9) über einen nur kurzen Hub an. Dazu hat die unter dem Schlitten (294) gelegene Kulissenausnehmung nur eine geringe Steigung. Das nach Figur 11 vordere Greifelement (295), das auf dem Schlitten (293) befestigt ist, hat die Aufgabe, ein auf dem Werkstückwagen (6) aufgesetztes Werkstück (9) nicht nur zu greifen, sondern auch gegen das Werkstückstützgatter (10) und das Greifelement (296) zu ziehen. Dafür ist ein großer Hub erforderlich. Also hat hier die Kulissenausnehmung im Schlitten eine große Steigung.

Die Spannzange (290) hat unterhalb der seitlichen Auskragungen der Greifelemente jeweils einen Lagerbock (310). Jeder Lagerbock (310) weist nach Figur 11 zwei nebeneinanderliegende Rollen (311) auf. Diese Rollen (311), die wälz- oder gleitgelagert im jeweiligen Lagerbock (310) gelagert sind, nehmen die Werkstücklast auf.

Nach Figur 9 wird die Gewichtslast des Werkstückes (9) rechts neben dem Zentrum des Führungswagens (262) eingeleitet. Dadurch entsteht um die Tragschiene (227) herum ein in Uhrzeigerdrehrichtung wirkendes Drehmoment, das den Werkstückwagen (6) stabilisierend mit seinem Abtriebsrad (273) und seinen Strom- und Signalabnehmern (286) gegen die Transportschiene (221) presst.

Nach Figur 1 hat beispielsweise mittig das Werkstückstützgatter (10) eine Aussparung (14), in der eine spezielle Stützeinrichtung (430) auf dem Maschinenbett (1) gelagert ist. Die Aussparung (14) ist hier gegenüber den beiden Handhabungsgeräten (7) angeordnet.

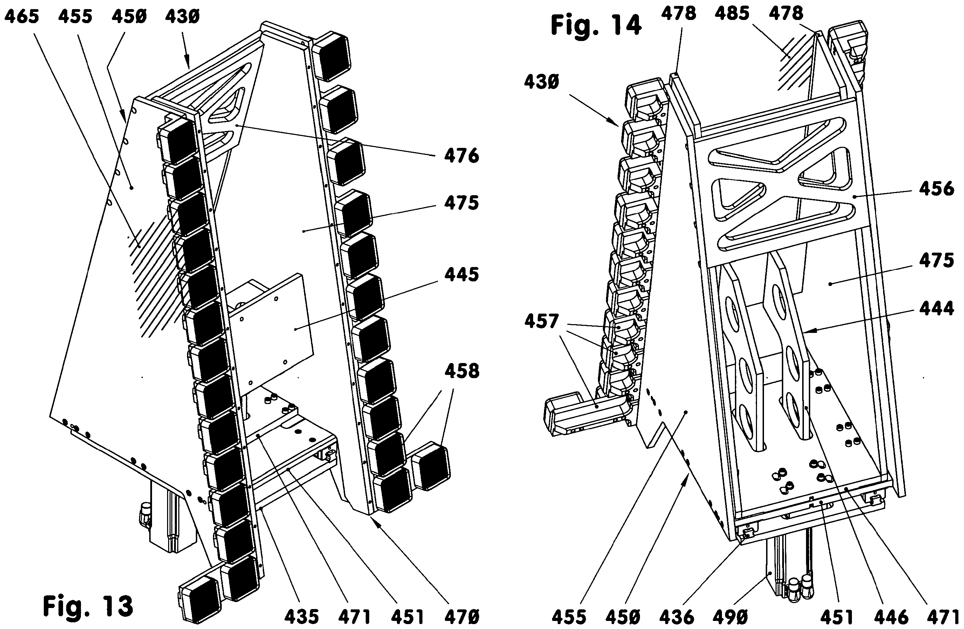

Die Figuren 13 und 14 zeigen die Stützeinrichtung (430) aus zwei verschiedenen Richtungen. Die in Figur 13 dargestellte Stützeinrichtung (430) weist mit ihrer Vorderseite nach vorn. Die Stützeinrichtung (430) besteht aus zwei ineinander verschachtelten Stützböcken (450, 470). Jeder Stützbock (450, 470) ist eine Art Turm, der im Wesentlichen aus vier größeren Bauteilen besteht. Das sind jeweils zwei z.B. baugleiche Seitenwangen (455, 475), eine Tragplatte (451, 471) und eine Versteifungsplatte (456, 476). Die beispielsweise parallel angeordneten Seitenwangen (455, 475) werden mittels der Tragplatte (451, 471) und der Versteifungsplatte (456, 476) auf Abstand gehalten. Die Seitenwangen (455, 475) beider Stützböcke (450, 470) haben jeweils Vorderkanten, die mit der jeweiligen Tragplatte (451, 471) einen Winkel von z.B. 80 Winkelgraden einschließen. In diesem Winkel ist auch das Werkstückstützgatter (10) mit seiner Stützfläche (465, 475) gegen eine Horizontalebene geneigt.

Die rückseitigen Kanten der Seitenwangen (455, 475) schließen mit einer Horizontalebene einen Winkel von z.B. 72 Winkelgraden ein. Bei jedem Stützbock (450, 470) befindet sich im oberen Bereich der Seitenwangen (455, 475), parallel zu den rückwärtigen Kanten, die jeweilige Versteifungsplatte (456, 476). Jede Versteifungsplatte (456, 476) hat die Form einer rechteckigen Platte mit vier Ausnehmungen. Die Ausnehmungen haben jeweils eine dreieckförmige Kontur, so dass zwischen den vier Ecken der jeweiligen Versteifungsplatte (456, 476) zwei diagonale Rippen stehen bleiben.

Jede Saugerseitenwange (455) trägt an ihrer Außenseite eine Vielzahl zum Beispiel gleichartiger Saugerträger (457) die jeweils zueinander einen z.B. konstanten Abstand haben. An jedem der hier übereinander angeordneten Saugerträger (457) befindet sich z.B. jeweils ein Saugelement (458), das als Vakuumsauger aufgebaut ist.

Im Bereich des unteren Endes der Saugerseitenwangen (455) sind längere Saugerträger (457) angeordnet, die jeweils zwei nebeneinanderliegende Saugelemente (458) aufweisen. Mithilfe der übereinanderliegenden Saugelemente (458), deren Saug- bzw. Anlageebene eine gedachte Stützfläche (465) bildet, werden in der Regel große plattenartige Werkstücke (9) gegen den Saugerstützbock (450) gesaugt, um die Werkstücke (9) zum Beispiel beim Bohren oder Fräsen fest am Werkstückstützgatter (10) entgegen der Werkzeugauszugskräfte zu halten. Mit den zum Beispiel vier unten liegenden Saugelementen (458) werden am Werkstückstützgatter (10) z.B. schmale, brettartige Werkstücke fixiert.

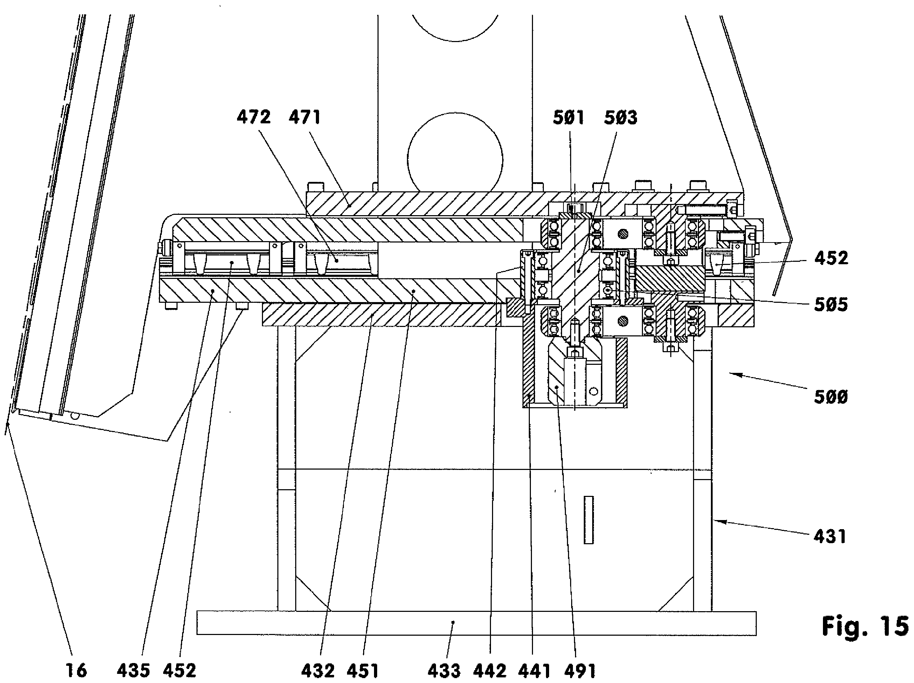

Nach Figur 15 ist der Saugerstützbock (450) auf einer Bodenplatte (435) verschiebbar gelagert. Die z.B. rechteckige Bodenplatte (435) sitzt auf einem Untergestell (431). Das Untergestell (431) besteht dazu aus einer Untergestellbodenplatte (433), die direkt auf dem Maschinenbett (1) aufgeschraubt ist, einer Untergestelltischplatte (432), auf der die Bodenplatte (435) montiert ist und einigen vertikal orientierten Stützplatten, die die beiden parallelen Untergestellboden- und - tischplatten (433, 432) auf einem konstruktiv festgelegten Abstand halten. Die Höhe des Untergestells (431) ist genauso hoch gewählt, dass die am weitesten unten angeordneten Saugelemente (458) des Saugerstützbocks (450) wenige Millimeter oberhalb der Werkstückwagen (6) bzw. derer Spannzangen liegen.

Auf der Bodenplatte (435) sind entlang der langen Seitenkanten der Bodenplatte (435) jeweils zwei parallel zueinander verlaufende Führungsschienen (436) aufgeschraubt, vgl. Figur 14. Auf jeder der Führungsschienen (436) sitzen vier Führungswagen (452). Die pro Führungsschiene (436) außenliegenden Führungswagen (452) lagern die Saugertragplatte (451), vgl. Figur 15.

Die Saugertragplatte (451) hat oberhalb jeder Führungsschiene (436) z.B. zwei Durchbrüche, durch die auf den beiden inneren Führungswagen (472) aufsitzende Führungswagendistanzstücke (473) befestigt sind. Auf denen wiederum ist die Gleitertragplatte (471) gelagert. Seitlich an der Gleitertragplatte (471) sind die Gleiterseitenwangen (475) befestigt. Dabei sind die Außenseiten der Gleiterseitenwangen (475) z.B. nur 27 mm von den Innenseiten der Saugerseitenwangen (455) entfernt. In der sogenannten Nullstellung der Stützböcke (450, 470), wie sie in Figur 15 dargestellt ist, endet die Hinterkante der Gleitertragplatte (471) z.B. 11 mm hinter der Saugertragplatte (451). Auf diese Weise befindet sich der Gleiterstützbock (470) vollständig innerhalb des Bauraumes des Saugerstützbocks (450).

Alternativ können auf dem Maschinenbett (1) die Stützböcke (450, 470) auch nebeneinander angeordnet werden. Es ist ferner möglich, beide Stützböcke (450, 470) so ineinander zu verschachteln, dass z.B. die eine Gleiterseitenwange (475) im Saugerstützbock (450) angeordnet ist, während die andere außerhalb des Saugerstützbocks (450) liegt.

Der Gleiterstützbock (470) weist an den vorderen Stirnflächen der Gleiterseitenwangen (475) jeweils eine durchgehende Gleitschiene (478) auf, vgl. Figur 14. Beide Gleitschienen (478) spannen mit ihren vorderen Anlageflächen eine Stützfläche (485) auf. Während des Bearbeitens der Werkstücke (9), beispielsweise beim Sägen oder Fräsen einer horizontalen Längsnut, gleitet das von den Werkstückwagen (6) geführte Werkstück (9) entlang dem Werkstückstützgatter (10). Dabei rutscht es über die vorstehenden Gleitschienen (478), gegen die es aufgrund der Bearbeitungskräfte gepresst wird.

Anstelle der durchgehenden Gleitschienen (478) können auch andere Gleitelemente wie z.B. Gleitnocken, Gleitklötze oder Rollen bzw. Walzen verwendet werden. Im letzteren Fall sind die Achsen der Rollen oder Walzen parallel zu den Vorderkanten der Gleiterseitenwangen (475) orientiert.

Innerhalb des umbauten Raumes des Gleiterstützbocks (470) ist ca. mittig ein Sensorenträger (444) angeordnet. Der Sensorenträger (444) besteht aus einer Sensorenträgerplatte (445) und zwei zueinander parallel angeordneten Trägerplattenfüßen (446). Die z.B. rechteckige Sensorenträgerplatte (445), vgl. Figur 13, ist parallel zur Stützfläche (16) orientiert. Sie hat von der Stützfläche (16) einen Abstand von 15 mm. Ihre nach Figur 14 gelochten Trägerplattenfüße (446) sind starr auf die Bodenplatte (435) montiert. Beide Tragplatten (451, 471) haben dazu entsprechende Aussparungen, um beim Verfahren nicht mit den Trägerplattenfü-βen (446) zu kollidieren. Der Sensorenträger (444) dient z.B. dem Halten von verschiedenen Sensoren, mittels derer die Werkstücke (9) ggf. über Barcodes identifiziert, gezählt und/oder zur Kontrolle vermessen werden.

Des Weiteren können auf dem Sensorenträger (444) auch ein oder mehrere Mehrkoordinatentaster oder dergleichen angeordnet werden, um die Nullposition einer gegenüber der Sensorenträgerplatte (445) positionierten Multifunktionseinheit (8) - in Bearbeitungspausen - gegenüber dem Werkstückstützgatter (10) zu vermessen. Ferner können auf dem Sensorenträger (444) z.B. Tastelemente, wie Zylinderkegel oder Würfel montiert werden, die von aus der Multifunktionseinheit (8) ausfahrbaren Tastern zu Messzwecken angefahren werden.

In Figur 15 ist das Verstellgetriebe (500), mit dessen Hilfe der Saugerstützbock (450) und der Gleiterstützbock (470) gegenüber der Bodenplatte (435) verschiebbar gelagert sind, im Schnitt in einer Neutralstellung dargestellt. In der Neutralstellung sind die Stützböcke (450, 470) gegenüber dem Werkstückstützgatter (10) genauso positioniert, dass deren Stützflächen (465, 485) nur wenige Millimeter hinter der Stützfläche (16) des Werkstückstützgatters liegen.

An der Bodenplatte (435) ist in einer Ausnehmung ein nach unten ragender Motorflansch (441) und ein darüber liegender Exzenterwellenlagerflansch (442) angeordnet. In der nach unten orientierten Zentrierung des Motorflansches (441) ist der Antrieb (490), vgl. Figur 14, zentriert angeflanscht. Der Antrieb (490) treibt über eine drehstarre Kupplung (491) eine Exzenterwelle (501) des Verstellgetriebes (500) direkt an. Die Exzenterwelle (501) ist über ihr Wellenmittelstück (503) im Exzenterwellenlagerflansch (442) in den Exzenterwellenlagern (505) gelagert sowie axial und radial fixiert. Die Exzenterwelle (501) weist oberhalb und unterhalb des Wellenmittelstücks (503) jeweils einen Exzenter (502, 504) auf.

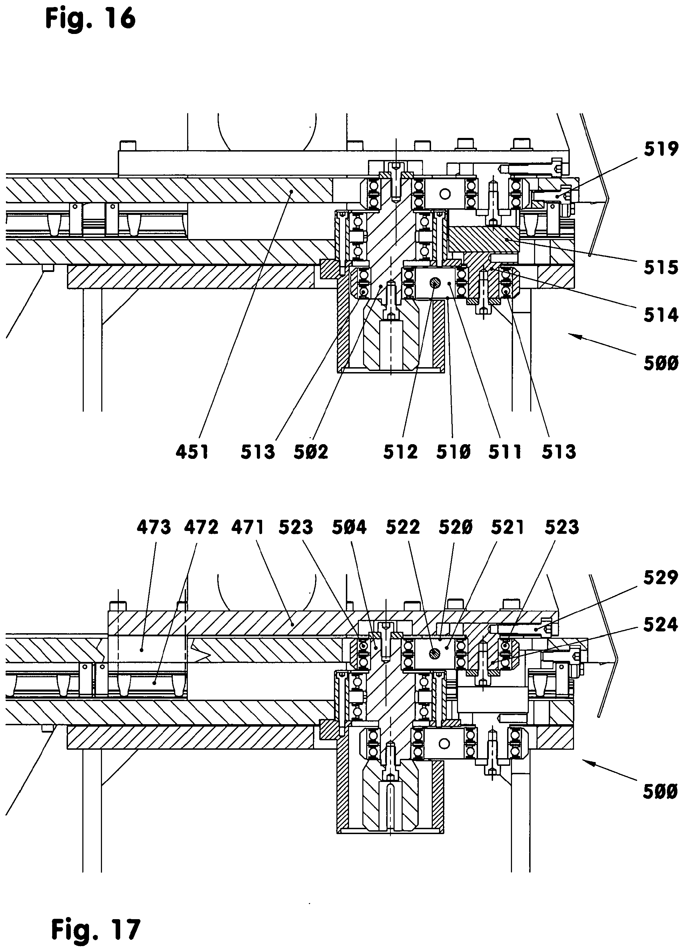

In Figur 16 ist der Schnitt des Verstellgetriebes (500) in einer Position gezeichnet, in der der Saugerstützbock (450) mit seiner Stützfläche (465) in oder vor der Stützfläche (16) des Werkstückstützgatters (10) positioniert ist. Die Stützfläche (465) liegt vor der Stützfläche (16), wenn sie zum Werkstück (9) hin versetzt ist. Der Betrag des Versatzes liegt z.B. zwischen 0,1 mm und 2 mm. Nach Figur 16 ist die Exzenterwelle (501), gegenüber ihrer Position aus Figur 15, um 90 Winkelgrade entgegen dem Uhrzeigerdrehsinn gedreht dargestellt. Auf diese Weise hat sich der Saugerexzenter (502) mit seiner Mittellinie nach links verlagert. Der Saugerexzenter (502) ist über ein Saugerpleuel (510) mit einer Saugerantriebsachse (514) gekoppelt. Die Saugerantriebsachse (514) ist über ein brückenartiges Saugerdistanzstück (515) an der Saugertragplatte (451) befestigt.

Das Saugerpleuel (510) ist z.B. eine quaderförmige Stange mit abgerundeten Stirnseiten. Am vorderen und hinteren Ende weist das Saugerpleuel (510) jeweils eine große Querbohrung auf. Beide Querbohrung sind über einen Mittenschlitz (511) miteinander verbunden. Quer zum Mittenschlitz (511) befindet sich in dessen Mitte in einer Gewindebohrung eine Klemmschraube (512). In beiden Querbohrungen sitzen jeweils zwei Saugerpleuellager (513), deren Außenringe mithilfe der Klemmschraube (512) verspannt werden. Je zwei Innenringe der vier Saugerpleuellager (513) sitzen axial fixiert zum einen auf dem Exzenter (502) und zum anderen auf der Saugerantriebsachse (514). Der Exzenter (502), das Saugerpleuel (510) und die an der Saugertragplatte (451) fixierte Saugerantriebsachse (514) bilden zusammen ein Schubkurbelgetriebe.

Um die Position der Saugerantriebsachse (514) gegenüber der Saugertragplatte (451) justieren zu können, ist nach Figur 16 links im Saugerdistanzstück (515) eine Justierschraube (519) eingeschraubt. Ihr Kopf stützt sich in einer Nut der Saugertragplatte (451) ab. Das Saugerdistanzstück (115) sitzt dazu mit seinen Befestigungsschrauben über saugertragplattenseitige Langlöcher in der Saugertragplatte (451).

Die Figur 17 zeigt einen Schnitt des Verstellgetriebes (500) in der Position, in der der Gleiterstützbock (470) nach vorn gefahren ist. In diesem Fall liegt die Stützfläche (485) des Gleiterstützbocks (470) in oder vor der Stützfläche (16) des Werkstückstützgatters (10). Hier hat der Servomotor (490) die Exzenterwelle (501) gegenüber der in Figur 15 dargestellten Ausgangslage um 90 Winkelgrade im Uhrzeigerdrehsinn geschwenkt. Die Mittellinie des Gleiterexzenters (504) hat sich gegenüber der Mittellinie des Wellenmittelstücks (503) nach vorn, in Figur 17 nach links, verlagert. In der Folge hat das Gleiterpleuel (520), das z.B. baugleich mit dem Saugerpleuel (510) ist, die Gleitertragplatte (471) und mit ihr den Gleiterstützbock (470) nach vorn gezogen. Um die Gleitertragplatte (471) mit dem Gleiterpleuel (520) kuppeln zu können, ist an ihr eine Gleiterantriebsachse (524) festgeschraubt. Auch die Gleiterantriebsachse (524) ist über eine Justierschraube (529) gegenüber der Gleitertragplatte (471) in geringem Maße verschiebbar.

Kombinationen der in den Figuren gezeigten Ausführungsbeispiele sind denkbar.

### Bezugszeichenliste:

- 1: Maschinenbett
- 2: Werkstücktransportsystem, Einschienentransportsystem
- 3: Transportschiene
- 4, 5: Drehscheiben, Umsetzer
- 6: Werkstückwagen, selbstfahrend
- 7: Handhabungsgeräte
- 8: Multifunktionseinheiten, werkzeugtragend
- 9: Werkstück, platten- und/oder brettartig

- 10: Werkstückstützgatter
- 11: Stützen
- 12: Anlehnplatten, Anlehnleisten
- 13: Bürstenreihen
- 14: Aussparung
- 15: Einheitsablagestellen
- 16: Stützfläche, gedachte Ebene, von (10)

- 20: Grundkörper
- 21: Werkzeugseite
- 22: Adapterseite
- 23: Stirnseiten
- 25: Seitenwandungen, lang
- 28: Deckel für Motorschacht

- 30: Motor, Antriebsmotor, Antrieb, Servomotor
- 31: Getriebe
- 32: Hauptantriebsrad
- 33: Verteilerräder, Zwischenräder
- 35: Antriebswelle von (30)
- 36: Abtriebsräder
- 38: Spaltraum

- 41: Schaltmittel, pneumatisch; Ventilblöcke
- 42: Schaltmittel, elektrisch
- 43: Gehäuse von (30), Kühlgehäuse
- 44: Stator von (30)
- 45: Statoraußenwandung, zylindrisch
- 46: Kühlmantel
- 47: Nut, schraubenförmig gewunden
- 48: Umlaufnuten
- 49: Dichtringe, O-Ringe

- 50: Werkzeuge, trennend; Werkzeugtyp
- 51: Bohrwerkzeuge, Bohrer
- 52: Bohrer für Clamex-Verbinder
- 53: Fräswerkzeuge
- 54: Sägewerkzeuge, Sägescheibe, groß
- 57: Sägewerkzeuge, Sägescheibe, klein, horizontal; für Clamex-Verbinder
- 58: Sägewerkzeuge, Sägescheibe, klein, vertikal; für Clamex-Verbinder

- 61: Pinolen
- 62: Werkzeugaufnahme
- 63: Einfachwinkelkopf
- 65: Doppelwinkelkopf, groß
- 66: Doppelwinkelkopf, klein, zwei Stempel
- 67: Bohr- und Fräsgruppe
- 69: Kombiwerkzeug für Topfscharnierbefestigung

- 70: Werkzeug, fügend; Werkzeugtyp
- 71: Andrückstempel, ausfahrbar
- 72: Andrückleisten
- 73: Gleitbelag
- 75: Parkposition, eingefahren
- 76: Arbeitsposition, ausgefahren
- 77: Führungsschienen
- 78: Kugelumlaufschuhe, Führung
- 79: Zylinder-Kolben-Einheit, Pneumatikzylinder

- 80: Gelenkroboter mit RRR-Kinematik
- 81: Grundplatte
- 82: A-Achse
- 83: Drehtisch, erstes Glied
- 84: B-Achse
- 85: Fußhebel
- 86: C-Achse
- 87: Kniehebel
- 88: D-Achse
- 89: Tragarm
- 91: E-Achse
- 92: Handhebel
- 93: F-Achse, Schwenkachse
- 94: Drehteller

- 100: Werkzeugschnittstellensystem
- 101: Adapter, grundkörperseitig; Werkzeugflansch, schnellwechselbare Schnittstelle, Flansch
- 102: Flanschplatte
- 103: Zentrierzentrumsbohrung
- 104: Flanschring
- 105: Rastringnut
- 106: Zentrieraufsatzhülsen
- 107: Zentrierbohrungen
- 111: Drehsperrausnehmung
- 115: Ausnehmungen für Übertragungsmodule

- 121: Gegenadapter, Roboterflansch, Adaptergegenstück, schnellwechselbare Schnittstelle, Flansch
- 122: Flanschplatte
- 123: Zentrierzentrumsbund
- 124: Flanschzapfen
- 125: Flanschringgegenstück
- 126: Verriegelungsbolzen
- 127: Zentrierbolzen

- 131: Drehsperrzapfen, konisch

- 135: Ausnehmungen für Übertragungsmodule
- 137: Distanzflansch

- 141: Übertragungsmodul, 19-polig für Signalübertragung, roboterseitig
- 142: Übertragungsmodul, 19-polig für Signalübertragung, werkzeugseitig
- 145: Übertragungsmodul, sechs Durchgänge für die Druckluftübertragung, roboterseitig
- 146: Übertragungsmodul, sechs Durchgänge für die Druckluftübertragung, werkzeugseitig

- 221, 222: Transportschienen, Schienen
- 223: Tragwinkel
- 225, 226: Enden der Transportschienen
- 227: Tragschienen
- 231: Zahnstangen
- 235: Mehrleiterstrom- und -signalschienen
- 237: Stromschienenabdeckung

- 240: Drehscheibe, Umsetzer
- 241, 242: Drehscheibentragschienen, Tragschienen
- 243: Drehscheibenzahnstange, Zahnstangen
- 245: Mehrleiterstrom- und -signalschienen
- 247: Stromschienenabdeckung

- 251: Drehscheibenmotor
- 252: Getriebe, Zugmittelgetriebe
- 253: Lagergehäuse
- 254: Rohrflansch
- 255: Tragplatte, Tischplatte, drehbar
- 256: Zahnstangentragschiene, winkelförmig
- 257: Drehtisch, wälzgelagert
- 258: Schienenstützen, nach unten ragend
- 259: Schwenkachse

- 261: Grundkörper, winkelförmig
- 262: Führungswagen, Kugelumlaufschuh
- 263: Fahrantrieb
- 264: Motor, ggf. mit integriertem Getriebe, Servomotor
- 265: Flanschplatte
- 266: Getriebegehäuse, plattenförmig
- 267: Lagerbock mit zwei Wälzlagern

- 271: Antriebswelle, Nebenwelle
- 272: Antriebsrad, groß, unten
- 273: Abtriebsrad, klein, oben

- 281: Schmierradachse, an Getriebegehäuse
- 282: Schmierrad, Filzrad
- 285: Abnehmerkragarm, Blechbauteil
- 286: Strom- und Signalabnehmer, federnd; Abnehmer

- 290: Spannzange
- 291: Zangengehäuse
- 293, 294: Schlitten
- 295, 296: Greifelemente
- 297: Kulissenantrieb, Servomotor, Getriebemotor

- 310: Lagerböcke
- 311: Rollen

- 430: Stützeinrichtung, Stützvorrichtung
- 431: Untergestell
- 432: Untergestelltischplatte
- 433: Untergestellbodenplatte
- 435: Bodenplatte
- 436: Führungsschienen

- 441: Motorflansch
- 442: Exzenterwellenlagerflansch

- 444: Sensorenträger
- 445: Sensorenträgerplatte
- 446: Trägerplattenfüße, plattenartig

- 450: Saugerstützbock, Stützbock
- 451: Saugertragplatte
- 452: Führungswagen, Kugelumlaufschuhe

- 455: Saugerseitenwangen
- 456: Saugerversteifungsplatte
- 457: Saugerträger
- 458: Saugelemente, Sauger, Vakuumsauger

- 465: Stützfläche, gedachte Ebene, von (50)

- 470: Gleiterstützbock, Stützbock
- 471: Gleitertragplatte
- 472: Führungswagen, Kugelumlaufschuhe
- 473: Führungswagendistanzstücke

- 475: Gleiterseitenwangen
- 476: Gleiterversteifungsplatte
- 478: Gleitelemente, Gleitschienen

- 485: Stützfläche, gedachte Ebene, von (70)

- 490: Antrieb, Getriebemotor, Servomotor
- 491: Kupplung, drehstarr

- 500: Verstellgetriebe
- 501: Exzenterwelle
- 502: Saugerexzenter, Exzenter
- 503: Wellenmittelstück
- 504: Gleiterexzenter, Exzenter
- 505: Exzenterwellenlager

- 510: Saugerpleuel
- 511: Mittenschlitz
- 512: Klemmschraube
- 513: Saugerpleuellager, Wälzlager
- 514: Saugerantriebsachse
- 515: Saugerdistanzstück, brückenartig
- 519: Justierschraube

- 520: Gleiterpleuel
- 521: Mittenschlitz
- 522: Klemmschraube
- 523: Gleiterpleuellager, Wälzlager
- 524: Gleiterantriebsachse
- 529: Justierschraube

## Patentansprüche

1. Bearbeitungsstation zum Bearbeiten von platten- und/oder brettartigen Werkstücken
- mit einem langgestreckten Werkstückstützgatter (10), an dem die Werkstücke (9) mit einer Seite verschiebbar anliegen,
- mit einer in das Werkstückstützgatter (10) integrierten Stützeinrichtung (430), die die Werkstücke (9) während der Bearbeitung abstützt und/oder fixiert,
- mit einem Transportsystem (2) für die Werkstücke (9), mit dem diese entlang dem Werkstückstützgatter (10) mindestens getragen, geführt und bewegt werden,
**dadurch gekennzeichnet, dass**
die Bearbeitungsstation mindestens zwei Handhabungsgeräte (7, 80) aufweist, die automatisch gesteuerte, frei programmierbare - in drei oder mehr Achsen bewegliche - Mehrzweckmanipulatoren sind,
- wobei jedes Handhabungsgerät (7, 80) eine Multifunktionseinheit (8) der Bearbeitungsstation trägt und führt, die aus einer Vielzahl von in einem Grundkörper (20) eingebauten bewegbaren Werkzeugen (51-58, 71) mit mindestens einem zentralen Antrieb (30) besteht,
- wobei mindestens eine Multifunktionseinheit (8) über einen Distanzflansch (137) am tragenden Handhabungsgerät (7, 80) angeordnet ist und
- wobei zur Bearbeitung des ruhenden oder bewegten Werkstücks (9) über das einzelne Handhabungsgerät (7, 80) mindestens ein Werkzeug (51-58, 71) am Werkstück (9) zum Eingriff bringbar ist.

2. Bearbeitungsstation gemäß Anspruch 1, **dadurch gekennzeichnet, dass** das einzelne Handhabungsgerät (7, 80) jeweils vor dem Werkstückstützgatter (10) ortsfest oder heranfahrbar direkt oder versetzt gegenüber der Stützeinrichtung (430) angeordnet ist.

3. Bearbeitungsstation gemäß Anspruch 1, **dadurch gekennzeichnet, dass** mindestens zwei Handhabungsgeräte (7, 80) mit ihren Multifunktionseinheiten (8) zur zeitgleichen Bearbeitung einsetzbar sind.

4. Bearbeitungsstation gemäß Anspruch 3, **dadurch gekennzeichnet, dass** in der Bearbeitungsphase beide Multifunktionseinheiten (8) parallel zueinander ausgerichtet sind, wobei die Multifunktionseinheiten (8) übereinander angeordnet sind.

5. Bearbeitungsstation gemäß Anspruch 1, **dadurch gekennzeichnet,**
**dass** sie eine Multifunktionseinheit aufweist,
- wobei sich die Werkzeuge (51-58, 71) im Grundkörper der Multifunktionseinheit entweder in einer eingefahrenen Parkposition (75) oder in einer ausgefahrenen Arbeitsposition (76) befinden,
- wobei die Werkzeuge (51-58, 71) verschiedene Typen (50, 70) für trennende und fügende Fertigungsverfahren darstellen,
- wobei von jedem Werkzeugtyp (50, 70) ein oder mehrere Werkzeuge (51-58, 71) vorhanden sind,
- wobei mehrere Werkzeuge (51-58, 71) - zu einer Gruppe mechanisch oder softwaretechnisch zusammengefasst - zeitgleich in eine Arbeitsposition (76) bringbar sind und
- wobei der Grundkörper (20) einen grundkörperseitigen Adapter (101) eines Werkzeugschnittstellensystems (100) aufweist, über den die Massenkräfte der Multifunktionseinheit abgestützt sind und über den mindestens die Energie und die Datenkommunikation übertragbar sind.

6. Bearbeitungsstation gemäß Anspruch 5, **dadurch gekennzeichnet, dass** der Grundkörper (20) der Multifunktionseinheit (8) eine quaderähnliche Form hat, wobei die Werkzeuge (51-58, 71) in derjenigen Seite des Grundkörpers (20) - der Werkzeugseite (21) - angeordnet sind, die gegenüber dem grundkörpertragenden Adapter (101) positioniert ist, wobei im Grundkörper (20) mindestens ein Antriebsmotor (30), das oder die Getriebe (31) und mindestens ein Teil der mechanischen, pneumatischen und/oder elektrischen Schaltmittel (41, 42) untergebracht sind.

7. Bearbeitungsstation gemäß Anspruch 5, **dadurch gekennzeichnet, dass** der Adapter (101) der Multifunktionseinheit (8) und der komplementäre Gegenadapter (121) eine schnellwechselbare Schnittstelle (100) bilden, wobei bei mehr als einer Multifunktionseinheit (8) am Gegenadapter (121) mindestens einer Multifunktionseinheit (8) an seinem freien - dem Adapter (101) abgewandten - Ende ein Disanzflansch (137) angeordnet ist.

8. Bearbeitungsstation gemäß Anspruch 1, **dadurch gekennzeichnet, dass** das Transportsystem (2) zum einen über mindestens zwei voneinander unabhängigen Transportschienen (221, 222) verfügt und das zum anderen mindestens einen Werkstückwagen (6) aufweist, der von den Transportschienen (221, 222) getragen und geführt ist,
- wobei die jeweils benachbart liegenden Enden (225, 226) zweier Transportschienen (221, 222) in eine Drehscheibe (4, 5) münden, um vom der einen (221, 222) auf die andere Transportschiene (221, 222) umsetzbar zu sein.

9. Bearbeitungsstation gemäß Anspruch 8, **dadurch gekennzeichnet, dass** die einzelne Transportschiene (221, 222) des Transportsystems (2) eingleisig gestaltet ist und eine Mehrleiterstrom- und -signalschiene (235) aufweist, wobei die Transportschiene (221, 222) mindestens aus einer obenliegenden Tragschiene (227) und einer unterhalb dieser angeordneten Zahnstange (231) besteht.

10. Bearbeitungsstation gemäß Anspruch 8, **dadurch gekennzeichnet, dass** die einzelne Drehscheibe (4, 5) des Transportsystems (2) zusammen mit den benachbarten Enden (225, 226) der Transportschienen (221, 222) in einer Ebene liegt, wobei die Schwenkachse (259) der Drehscheibe (4, 5) senkrecht zu dieser Ebene orientiert ist.

11. Bearbeitungsstation gemäß Anspruch 8, **dadurch gekennzeichnet, dass** die einzelne Drehscheibe (4, 5) des Transportsystems (2) jeweils eine Tragplatte (255) aufweist, die zwei einander gegenüber angeordnete obenliegende Drehscheibentragschienen (241, 242), eine untenliegende Mehrleiterstrom- und -signalschiene (245) und eine dazwischenliegende Drehscheibenzahnstange (243) hat und pro Drehscheibentragschiene (241, 242) Platz für mindestens einen Werkstückwagen (6) aufweist.

12. Bearbeitungsstation gemäß Anspruch 8, **dadurch gekennzeichnet, dass** der einzelne Werkstückwagen (6) des Transportsystems (2) eine elektromechanisch betätigbare Spannzange (290) aufweist, wobei die Spannzange (290) zwei einander gegenüberliegende Greifelemente (295, 296) hat, die unterschiedliche Hübe haben.

13. Bearbeitungsstation gemäß Anspruch 1, **dadurch gekennzeichnet, dass** die bewegliche Stützeinrichtung (430) in einer Aussparung (14) eines auf einem Maschinenbett (1) angeordneten Werkstückstützgatters (10) mit vorgelagertem Werkstücktransportsystem (2) mit Werkstückwagen (6) für platten- und/oder brettartige Werkstücke (9) angeordnet ist,
- wobei das Werkstückstützgatter (10) - zum anlehnenden Abstützen der Werkstücke (9) - eine Stützfläche (16) hat, die gegenüber einer Horizontalebene eine Neigung zwischen 75 und 90 Winkelgraden einnimmt,
- wobei die Stützeinrichtung (430) mindestens zwei Stützböcke (450, 470) aufweist, die quer zur Verfahrrichtung der Werkstückwagen (6) aus einer Position hinter der Ebene der Stützfläche (16) in eine Position in der Ebene der Stützfläche (16) fremdangetrieben verschiebbar sind,
- wobei ein erster Stützbock (450) mindestens zwei abstützende und fixierende Saugelemente (458) zum Fixieren des oder der Werkstücke (9) hat und
- wobei ein zweiter Stützbock (470) mindestens ein abstützendes Gleitelement (478) aufweist.

14. Bearbeitungsstation gemäß Anspruch 13, **dadurch gekennzeichnet, dass** die Stützböcke (450, 470) der Stützeinrichtung (430) - zumindest über eine Bodenplatte (435) - auf dem Maschinenbett (1) wälzgelagert angeordnet sind, wobei die Richtung ihres jeweiligen Verstellhubes in einer Horizontalebene liegt.

15. Bearbeitungsstation gemäß Anspruch 13, **dadurch gekennzeichnet, dass** beide Stützböcke (450, 470) der Stützeinrichtung (430) auf der Bodenplatte (435) verschiebbar und parallel zueinander gelagert sind, wobei der Gleitelemente (478) tragende Stützbock (470) zumindest teilweise innerhalb des Saugelemente (458) tragenden Stützbockes (450) angeordnet ist.

16. Bearbeitungsstation gemäß Anspruch 13, **dadurch gekennzeichnet, dass** beide Stützböcke (450, 470) der Stützeinrichtung (430) mittels eines elektrisch, pneumatisch oder hydraulisch angetriebenen Verstellgetriebes (500) gegenüber der Bodenplatte (435) verstellbar sind, wobei das Verstellgetriebe (500) für jeden Stützbock (450, 470) ein Schubkurbelgetriebe aufweist, dessen Antriebsglied jeweils ein Exzenter (502, 504) einer zwei Exzenter aufweisenden Exzenterwelle (501) ist.

## Claims

1. Processing station for processing plate and/or board like workpieces:
- having an elongated workpiece support fence (10) on which the workpieces (9) contact with one side in a displaceable manner,
- having a support device (430), which is integrated into the workpiece support fence (10) and which supports and/or fixes the workpieces (9) during processing,
- having a transport system (2) for the workpieces (9), by means of which transport system said workpieces are at least supported, guided and moved along the workpiece support fence (10),
**characterized in that**
- the processing station has at least two handling devices (7, 80) which are automatically controlled, freely programmable multi-purpose manipulators - movable in three or more axes,
- wherein each handling device (7, 80) supports and guides one multifunctional unit (8) of the processing station, said multifunctional unit comprising a plurality of tools (51-58, 71), movably incorporated in a base body (20), with at least one central drive (30),
- wherein at least one multifunctional unit (8) is arranged on the supporting handling device (7, 80) via a spacer flange (137), and
- wherein at least one tool (51-58, 71) can be moved into engagement on the workpiece (9) for processing the stationary or moving workpiece (9) via the individual handling device (7, 80).

2. Processing station according to claim 1, **characterized in that** the individual handling device (7, 80) is respectively arranged stationarily or movably directly in front of the workpiece support fence (10) or offset with respect to the support device (430).

3. Processing station according to claim 1, **characterized in that** at least two handling devices (7, 80) with their multifunctional units (8) can be used for concurrent processing.

4. Processing station according to claim 3, **characterized in that** both multifunctional units (8) are aligned parallel to one another in the processing phase, wherein the multifunctional units (8) are arranged one over the other.

5. Processing station according to claim 1, **characterized in that** it has a multifunctional unit,
- wherein the tools (51-58, 71) in the base body of the multifunctional unit are located either in a retracted parked position (75) or in an extended processing position (76),
- wherein the tools (51-58, 71) represent different types (50, 70) for separating and joining manufacturing processes,
- wherein one or more tools (51-58, 71) of each tool type (50, 70) are present,
- wherein multiple tools (51-58, 71) - grouped together mechanically or via software - can be concurrently moved into a working position (76), and
- wherein the base body (20) has a base-body-side adapter (101) of a tool interface system (100), via which the inertial forces of the multifunctional unit are supported and via which at least power and data communication can be transferred.

6. Processing station according to claim 5, **characterized in that** the base body (20) of the multifunctional unit (8) has a cuboidal shape, wherein the tools (51-58, 71) are arranged **in that** side of the base body (20) - the tool side (21) - which is positioned opposite the adapter (101) supporting the base body, wherein at least one drive motor (30), the transmission(s) (31), and at least one part of the mechanical, pneumatic and/or electric switching means (41, 42) are incorporated in the base body (20).

7. Processing station according to claim 5, **characterized in that** the adapter (101) of the multifunctional unit (8) and the complementary counter adapter (121) form a quick-change interface (100), wherein, in the case of more than one multifunctional unit (8), a spacer flange (137) is arranged on the counter adapter (121) of at least one multifunctional unit (8) at its free end facing away from the adapter (101).

8. Processing station according to claim 1, **characterized in that** the transport system (2) is equipped on the one hand with at least two transport rails (221, 222) independent from one another and has on the other hand at least one workpiece carriage (6), which is supported and guided by the transport rails (221, 222),
- wherein the respective adjacent ends (225, 226) of the two transport rails (221, 222) open into a rotary hub (4, 5) in order to be moved from the one transport rail (221, 222) to the other (221, 222).

9. Processing station according to claim 8, **characterized in that** the individual transport rail (221, 222) of the transport system (2) is configured as single-track, and a has a multi-conductor power and signal busbar (235), wherein the transport rail (221, 222) comprises at least one upper mounting rail (227) and a gear rack (231) arranged underneath the same.

10. Processing station according to claim 8, **characterized in that** the individual rotary hub (4, 5) of the transport system (2) lies in a plane together with the adjacent ends (225, 226) of the transport rails (221, 222), wherein the pivot axis (259) of the rotary hub (4, 5) is oriented perpendicular to this plane.

11. Processing station according to claim 8, **characterized in that** the individual rotary hub (4, 5) of the transport system (2) respectively has a support plate (255), which has two upper rotary hub mounting rails (241, 242) arranged opposite one another, a lower multi-conductor power and signal busbar (245), and a rotary hub gear rack (243) lying therebetween, and space for at least one workpiece carriage (6) per rotary hub mounting rail (241, 242).

12. Processing station according to claim 8, **characterized in that** the individual workpiece carriage (6) of the transport system (2) has an electromechanically actuatable collet (290), wherein the collet (290) has two gripping elements (295, 296) opposite one another and having different stroke lengths.

13. Processing station according to claim 1, **characterized in that** the movable support device (430) is arranged in a recess (14) of a workpiece support fence (10) arranged on a machine bed (1) with an upstream workpiece transport system (2) having workpiece carriages (6) for plate and/or board-like workpieces (9),
- wherein the workpiece support fence (10) - for leaning support of the workpieces (9) - has a support surface (16), which assumes an inclination between 75 and 90 degrees relative to a horizontal plane,
- wherein the support device (430) has at least two support frames (450, 470), which are externally driven to be displaceable transverse to the movement direction of the workpiece carriages (6) from a position behind the plane of the support surface (16) into a position in the plane of the support surface (16),
- wherein a first support frame (450) has at least two supporting and fixing suction elements (458) for fixing the workpiece(s) (9), and
- wherein a second support frame (470) has at least one supporting sliding element (478).

14. Processing station according to claim 13, **characterized in that** the support frames (450, 470) of the support device (430) are arranged mounted on roller bearings on the machine bed (1) - via at least one bottom plate (435), wherein the direction of their respective adjustment stroke lies in a horizontal plane.

15. Processing station according to claim 13, **characterized in that** the two support frames (450, 470) of the support device (430) are mounted displaceably and parallel to one another on the bottom plate (435), wherein the support frame (470) supporting the sliding elements (478) is arranged at least partially within the support frame (450) supporting the suction elements (458).

16. Processing station according to claim 13, **characterized in that** the two support frames (450, 470) of the support device (430) are adjustable with respect to the bottom plate (435) by means of an electrically, pneumatically, or hydraulically driven adjusting gear (500), wherein the adjusting gear (500) has a slider crank mechanism for each support frame (450, 470), the drive member of said slider crank mechanism is in each case an eccentric (502, 504) of an eccentric shaft (501) having two eccentrics.

## Revendications

1. Poste d'usinage, destiné à l'usinage de pièces à usiner de type plaques et/ou planches
- pourvu d'une grille de support (10) des pièces à usiner allongée, sur laquelle les pièces à usiner (9) s'appuient par un côté, en étant déplaçables,
- pourvu d'un dispositif de soutien (430) intégré dans la grille de support (10) des pièces à usiner, qui soutient et/ou fixe les pièces à usiner (9) pendant l'usinage,
- pourvu d'un système de transport (2) des pièces à usiner (9), par lequel celles-ci sont pour le moins portées, guidées et déplacées le long de la grille de support (10) des pièces à usiner,
**caractérisé en ce que**
- le poste d'usinage comporte au moins deux instruments de manipulation (7, 80), qui sont des manipulateurs polyvalents à commande automatique déplaçables dans trois axes ou plus,
- chaque instrument de manipulation (7, 80) portant et guidant une unité multifonctionnelle (8) du poste d'usinage, qui est constituée d'une pluralité d'outils (51 à 58, 71) déplaçables, incorporés dans un corps de base (20), avec au moins un entraînement (30) centralisé,
- au moins une unité multifonctionnelle (8) étant placée par l'intermédiaire d'une bride entretoise (137) sur l'instrument de manipulation (7, 80) porteur, et
- pour l'usinage de la pièce à usiner (9) au repos ou déplacée, par l'intermédiaire de l'instrument de manipulation (7, 80) individuel, au moins un outil (51 à 58, 71) étant susceptible d'être amené en engagement sur la pièce à usiner (9).

2. Poste d'usinage selon la revendication 1, **caractérisé en ce que** l'instrument de manipulation (7, 80) individuel est chaque fois placé à l'avant de la grille de support (10) des pièces à usiner, de manière stationnaire ou susceptible d'être mis en prise, directement ou avec un décalage par rapport au dispositif de soutien (430).

3. Poste d'usinage selon la revendication 1, **caractérisé en ce qu'**au moins deux instruments de manipulation (7, 80) sont susceptibles d'être utilisés avec leurs unités multifonctionnelles (8) pour l'usinage simultané.

4. Poste d'usinage selon la revendication 3, **caractérisé en ce que** dans une phase d'usinage, les deux unités multifonctionnelles (8) sont orientées à la parallèle l'une de l'autre, les unités multifonctionnelles (8) étant placées en superposition.

5. Poste d'usinage selon la revendication 1, **caractérisé en ce que** qu'il comporte une unité multifonctionnelle,
- les outils (51-58, 71) se trouvant dans le corps de base de l'unité multifonctionnelle soit dans une position de repos (75) rentrée ou dans une position de travail (76) sortie,
- les outils (51-58, 71) représentant différents types (50, 70), destinés à des procédés de fabrication de séparation et de jonction,
- un ou plusieurs outils (51 à 58, 71) de chaque type d'outils (50, 70) étant présent,
- plusieurs outils (51 à 58, 71) - (réunis en un groupe, par moyen mécanique ou logiciel - étant susceptibles d'être amenés simultanément dans une position de travail (76) et
- le corps de base (20) comportant un adaptateur (101) côté corps de base d'un système d'interface d'outil (100), par l'intermédiaire duquel les efforts de masses de l'unité multifonctionnelle sont soutenus et par l'intermédiaire duquel, au moins l'énergie et la communication des données sont transmissibles.

6. Poste d'usinage selon la revendication 5, **caractérisé en ce que** le corps de base (20) de l'unité multifonctionnelle (8) a une forme analogue à un carré, les outils (51 à 58, 71) étant placés dans le côté du corps de base (20) - le coté outil (21), qui est positionné au vis-à-vis de l'adaptateur (101) portant le corps de base, dans le corps de base (20) étant logés au moins un moteur d'entraînement (30), la ou les transmissions (31) et au moins une partie des moyens de commutation (41, 42) mécaniques, pneumatiques et/ou électriques.

7. Poste d'usinage selon la revendication 5, **caractérisé en ce que** l'adaptateur (101) de l'unité multifonctionnelle (8) et le contre-adaptateur (121) complémentaire forment une interface (100) à changement rapide, dans le cas de plus d'une unité multifonctionnelle (8) une bride entretoise (137) étant placée sur le contre adaptateur (121) d'au moins une unité multifonctionnelle (8) sur son extrémité libre opposée à l'adaptateur (101).

8. Poste d'usinage selon la revendication 1, **caractérisé en ce que** le système de transport (2) dispose d'une part d'au moins deux rails de transport (221, 222) indépendants l'un de l'autre et comporte d'autre part au moins un chariot (6) de pièce à usiner, qui est porté et guidé par les rails de transport (221, 222),
- les extrémités (225, 226) respectivement voisines de deux rails de transport (221, 222) débouchant dans une plaque rotative (4, 5) pour être transférables de l'un (221, 222) sur l'autre rail de transport (221, 222).

9. Poste d'usinage selon la revendication 8, **caractérisé en ce que** le rail de transport (221, 222) individuel du système de transport (2) est conçu à voie unique et comporte une bus-barre d'alimentation et de signalisation (235), le rail de transport (221, 222) étant constitué d'au moins un rail porteur (227) situé en haut et d'une et d'une crémaillère (231) située sous celui-ci.

10. Poste d'usinage selon la revendication 8, **caractérisé en ce que** la plaque rotative (4, 5) individuelle du système de transport (2), conjointement avec l'extrémité (225, 226) proche des rails de transport (221, 222) se situe dans un plan, l'axe de pivotement (259) de la plaque rotative (4, 5) étant orienté à la perpendiculaire dudit plan.

11. Poste d'usinage selon la revendication 8, **caractérisé en ce que** la plaque rotative (4, 5) individuelle du système de transport (2) comporte chaque fois une plaque porteuse (255), qui détient deux rails porteurs (241, 242) de plaque rotative situés en haut, placés en vis-à-vis l'un de l'autre, une bus-barre d'alimentation et de signalisation (245) située en bas et une crémaillère (243) de plaque porteuse, interposée entre ces derniers et comporte pour chaque rail porteur (241, 242) de plaque rotative de la place pour au moins un chariot (6) de pièce à usiner.

12. Poste d'usinage selon la revendication 8, **caractérisé en ce que** le chariot (6) de pièce à usiner individuel du système de transport (2) comporte une pince de serrage (290) électromécaniquement actionnable, la pince de serrage (290) disposant de deux éléments de préhension (295, 296) placés au vis-à-vis l'un de l'autre, qui font preuve de courses différentes.

13. Poste d'usinage selon la revendication 1, **caractérisé en ce que** le dispositif de soutien (430) déplaçable est placé dans une encoche (14) d'une grille de support (10) des pièces à usiner placée sur un bâti de machine (1), avec système de transport (2) de pièces à usiner en amont, avec chariot (6) de pièces à usiner pour des pièces à usiner (9) de type plaques et/ou planches,
- la grille de support (10) des pièces à usiner détenant pour le soutien par appui des pièces à usiner (9) une surface de support (16), qui par rapport à un plan horizontal adopte une inclinaison comprise entre 75 et 90 degrés,
- le dispositif de soutien (430) comportant au moins deux chevalets (450, 470) qui sont déplaçables par entraînement extérieur à la transversale de la direction de déplacement du chariot (6) de pièces à usiner, d'une position à l'arrière du plan de la surface de support (16) dans une position dans le plan de la surface de support (16),
- un premier chevalet (450) détenant au moins deux éléments d'aspiration (458) assurant le soutien et la fixation, pour fixer la ou les pièces à usiner (9), et
- un deuxième chevalet (470) comportant au moins un élément coulissant (478) assurant le soutien.

14. Poste d'usinage selon la revendication 13, **caractérisé en ce que** les chevalets (450, 470) du dispositif de soutien (430) sont placés via des paliers de roulement par l'intermédiaire d'au moins une plaque d'embase (435) sur le bâti de machine (1), la direction de leur course de réglage respective se situant dans un plan horizontal.

15. Poste d'usinage selon la revendication 13, **caractérisé en ce que** les deux chevalets (450, 470) du dispositif de soutien (430) sont logés de manière déplaçable et à la parallèle l'un de l'autre sur la plaque d'embase (435), le chevalet (470) portant des éléments coulissants (478) étant placé au moins en partie à l'intérieur du chevalet (450) portant des éléments d'aspiration (458).

16. Poste d'usinage selon la revendication 13, **caractérisé en ce que** les deux chevalets (450, 470) du dispositif de soutien (430) sont réglables au moyen d'un réducteur de réglage (500) à entraînement électrique, pneumatique ou hydraulique par rapport à la plaque d'embase (435), le réducteur de réglage (500) comportant pour chaque chevalet (450, 470) une transmission à vilebrequin, dont l'organe d'entraînement est respectivement un excentrique (502, 504) d'un arbre excentrique (501) comportant deux excentriques.
